(19) **Europäisches Patentamt European Patent Office Office européen des brevets**

(11) **EP 3 212 442 B1**

(12) **EUROPEAN PATENT SPECIFICATION**

(45) Date of publication and mention of the grant of the patent:
**18.12.2019 Bulletin 2019/51**

(51) Int Cl.:
***B60C 9/20*** *(2006.01)*   ***B60C 9/02*** *(2006.01)*

(21) Application number: **14799078.2**

(22) Date of filing: **29.10.2014**

(86) International application number:
**PCT/US2014/062871**

(87) International publication number:
**WO 2016/068906 (06.05.2016 Gazette 2016/18)**

(54) **OPTIMAL BODY PLY SHAPE FOR A TIRE**

OPTIMALE KARKASSENLAGEFORM FÜR EINEN REIFEN

FORME DE NAPPE CARCASSE AMÉLIORÉE POUR PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.09.2017 Bulletin 2017/36**

(73) Proprietor: **Compagnie Générale des Etablissements Michelin**
**63000 Clermont-Ferrand (FR)**

(72) Inventors:
• **CLAYTON, Bill**
**Greenville, South Carolina 29605 (US)**
• **HICKS, Daniel, McEachern**
**Greenville, South Carolina 29605 (US)**
• **RHYNE, Timothy, B.**
**Greenville, South Carolina 29605 (US)**

(74) Representative: **Casalonga**
**Casalonga & Partners**
**Bayerstraße 71/73**
**80335 München (DE)**

(56) References cited:
**EP-A2- 0 103 984    WO-A1-2011/070111**
**FR-A1- 2 796 005**

EP 3 212 442 B1

**Description**

## FIELD OF THE INVENTION

The subject matter of the present disclosure relates generally to a novel shape for the body ply, or carcass, of a tire including a wide-based single tire.

## BACKGROUND OF THE INVENTION

The body ply of a tire, also referred to sometimes as the carcass or carcass ply, extends from the bead portions, through both opposing sidewall portions, and the crown portion of the tire. One or more layers that include substantially inextensible materials referred to e.g., as cords are typically used in its construction. For a radial tire, these cords are typically oriented at greater than about 80 degrees as measured from an equatorial plane of the tire within the crown portion. In a pneumatic tire, the body ply helps constrain inflation pressure and determine the overall shape of the tire upon inflation. When the tire is inflated to a given pressure, the body ply will assume a particular shape or profile in the meridian plane that is referred to as the equilibrium curve.

Body ply design poses a challenge for all tires and particularly for wide-based single (WBS) tires, which are tires that typically have a relatively wide crown portion and may be used to replace a pair of tires each having a relatively narrow crown portion. All tires, particularly WBS tires, commonly have a difference in rigidity between the center of the tire and the shoulder portions. This difference can be particularly pronounced as compared with either of the dual conventional tires that a single WBS tire replaces. The difference in rigidity can lead to uneven growth of the tire as it is inflated including differences in growth along the crown portion where the tread is located. As a result, the tire can experience enhanced motion of the shoulders compared with the center when the tire is rolling, which can create issues such as groove bottom cracking in the tread and an enhanced sensitivity of the contact patch shape to load variations.

For a heavy truck tire, uneven inflation growth can also cause the tire to experience a break-in period (e.g., the first thousand miles or so) during initial use. During the break-in period, the rubber of the tire experiences viscoelastic relaxation due to the stresses created by uneven inflation growth. As a result, the shape or profile of the tire evolves in order to dissipate the stress. Such evolving shape impedes the ability to optimize the design of the tire for tread wear performance - resulting in a tread wear rate that is typically unacceptably high during the break-in period.

Conventionally, the equilibrium curves used for tire design and construction are based upon a traditional three-ply membrane model. Unfortunately, because of the large difference in rigidity between the center and the shoulder portions of the tire, particularly a WBS tire, this traditional model can yield a tire with uneven inflation growth. Again, this uneven inflation growth can create a flex point in shoulder of the tire, which can place large stresses on shoulder groove bottoms and reduce the rigidity of the shoulder portions relative to the center of the tire.

Previous attempts to achieve even inflation growth have focused on e.g., adding structural stiffness to the belt package in the crown portion so as to mechanically restrain unwanted inflation growth and/or adding rubber portions in an effort to shape inflation growth. Unfortunately, these approaches increase the cost of the tire as well as the mass of the tire. Increased mass can adversely affect tire performance such as rolling resistance.

EP 0 103 984 relates to a method of manufacturing a radial tire in an effort to reduce rolling resistance without adversely affecting wet traction.

WO 2011/070111 relates to a tire for heavy vehicles that includes certain reinforcements.

FR 2 796 005 relates to a tire with a tread including certain reinforcing fabric(s).

Thus, a tire employing a body ply that provides for more uniform inflation growth would be useful. Having these features in a tire such as e.g., a WBS tire that can also prevent or deter e.g., groove bottom cracking in the tread, decrease sensitivity to load variations, reduce or eliminate the break-in effect, and/or provide other benefits would be useful. Achieving these advantageous benefits without increasing the mass or deleteriously affecting the rolling resistance or other performance criteria would be particularly beneficial. A method of creating or designing such a tire would also be useful.

## SUMMARY OF THE INVENTION

The present invention provides a tire having uniform inflation growth. More particularly, the tire is provided with a body ply that is displaced from the conventional equilibrium curve along the bead, sidewall, and shoulder portions of the tire in a manner that provides more uniform inflation growth from bead portion to bead portion. Such construction reduces load sensitivity, reduces or eliminates the tire break-in period, and/or decreases the propensity for cracking - particularly along a groove bottom of the tread in the shoulder.

These improvements can be provided without increasing the mass of the tire or deleteriously affecting certain other performance factors such as rolling resistance. Instead, the improvement can be obtained by changes to the geometry (i.e. shape or profile) in the meridian plane of the body ply of a tire. A method for designing or constructing such a tire is also provided by the present invention. Additional objects and advantages of the invention will be set forth in part in the following description, or may be apparent from the description, or may be learned through practice of the invention.

In one exemplary embodiment of the present invention, a tire is provided that defines a radial direction, an axial direction, and a tire centerline. The tire includes a pair of opposing bead portions; a pair of opposing sidewall portions connected with the opposing bead portions; a crown portion connecting the opposing sidewall portions; and at least one body ply extending between the bead portions and through the sidewall and crown portions. The body ply has a curve or profile along a meridian plane, wherein $s$ is the length in mm along the curve from centerline of the tire.

One or more belt plies are positioned in the crown portion, $s_M$ represents one-half of the maximum curvilinear width, along the axial direction, of the widest belt of the one or more belt plies having an angle $\alpha$ in the range of - 80 degrees $\leq \alpha \leq$ + 80 degrees with respect to an equatorial plane of the tire.

When a basis curve having three points of tangency p, d, and q is constructed for the body ply, along at least one side of the tire centerline the body ply has i) a deviation $D(s)$ from the basis curve in the range of - 4.25 mm $\leq D(s)$ $\leq$ 0.5 mm at a point $P_1 = 0.13s_q + 0.87s_M$ - 56.6 mm, and ii) a deviation $D(s)$ from the basis curve in the range of - 0.5 mm $\leq D(s) \leq$ 1.25 mm at a point $P_2 = 0.8s_q + 0.2\ s_M$-13 mm; where $s_q$ is the length along the curve of the basis curve at which point q occurs.

In another exemplary aspect, the present invention provides a method of tire construction. The tire includes a centerline and a pair of opposing bead portions, a pair of opposing sidewall portions connected with the opposing bead portions, a crown portion connected with, and extending along an axial direction between, the opposing sidewall portions, at least one body ply extending between the bead portions and through the crown portion and sidewall portions, at least one belt ply located in the crown portion, the at least one belt ply being the widest belt ply along the axial direction of the tire having an angle $\alpha$ in the range of in the range of -80 degrees $\leq \alpha \leq$ + 80 degrees with respect to an equatorial plane of the tire. This exemplary method of tire construction includes the steps of creating a model of the tire that includes a reference curve representing the shape of the body ply along a meridian plane when the tire is inflated to a reference pressure, wherein $s$ is a length in mm along the reference curve from a centerline of the tire; constructing a basis curve for the tire based upon the reference curve of the tire at the reference pressure, the basis curve having three points of tangency p, d, and q; creating a target reference curve for the shape of the body ply along the meridian plane by repositioning the reference curve to have, along at least one side of the tire centerline: i) a deviation $D(s)$ from the basis curve in the range of - 4.25 mm $\leq D(s) \leq$ 0.5 mm at a point $P_1 = 0.13s_q + 0.87s_M$ - 56.6 mm, and ii) a deviation $D(s)$ from the basis curve in the range of - 0.5 mm $\leq D(s) \leq$ 1.25 mm at a point $P_2 = 0.8s_q + 0.2\ s_M$- 13 mm. $s_q$ is the length along the curve of the basis curve at which point q occurs.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

## BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 illustrates a view of a cross-section of an exemplary embodiment of a tire of the present invention. The cross-section is taken along a meridian plane of the tire and is not necessarily drawn to scale.

FIG. 2 illustrates a cross-sectional view of an exemplary body ply along a meridian plane. Only one half of the curve representing the body ply is shown - i.e. the portion of the curve along one side of the tire centerline at $s = 0$.

FIG. 3 is a cross-sectional view along a meridian plane of two curves representing the deviation $D(s)$ of a curve $\vec{X_0}$ from a reference curve $\vec{R_0}$ at a point so.

FIG. 4 is a cross-sectional view along a meridian plane that illustrates the change in the shape of a body ply when inflated between a reference pressure and a nominal pressure.

FIG. 5 is a plot of inflation growth for a conventional tire and a tire having an inventive body ply of the present invention.

FIG. 6 illustrates components in the construction of a basis curve for the curve of a body ply.

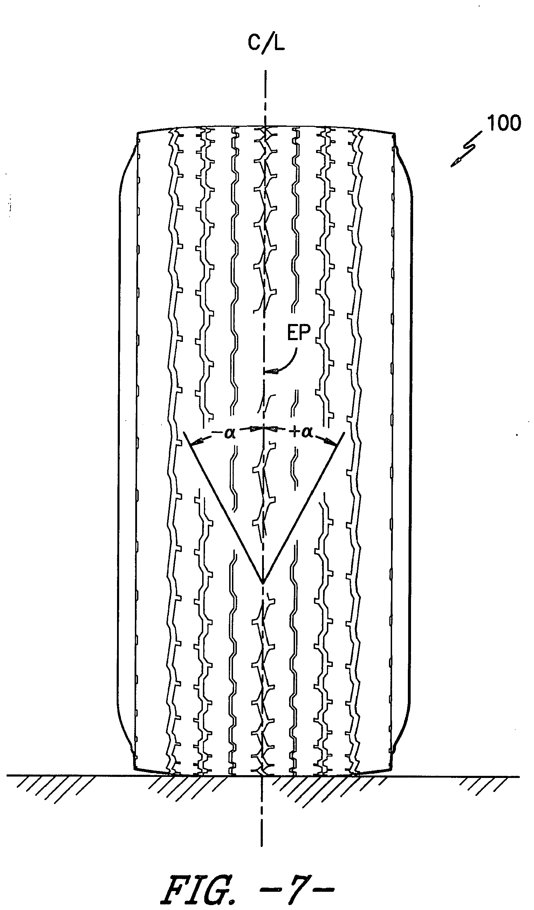

FIG. 7 is a front view of an exemplary tire of the present invention.

FIG. 8 is a cross-sectional view, along a meridian plane, of an exemplary body ply of the present invention and basis curve constructed from the exemplary body ply.

FIGS. 9, 10, 11, 12, 13, 16, and 17 are plots of deviation as a function of curve length as more fully described herein.

FIGS. 14, 15, 18 are plots of inflation growth as a function of curve length as more fully described herein,
FIGS. 19 and 20 are plots of inflation growth for deviations at points $P_1$ and $P_2$ as further described herein.
FIG. 21 is a cross-sectional view of a groove of a tire modeled to determine the first principal Cauchy stress P1 as more fully described herein.

## DETAILED DESCRIPTION

For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications arid variations can be made in the present invention without departing from the scope of the invention. For instance, features illustrated or described as part of one embodiment, can be used with another embodiment to yield a still further embodiment. Thus, it is intended that the present invention covers such modifications and variations as come within the scope of the appended claims and their equivalents.

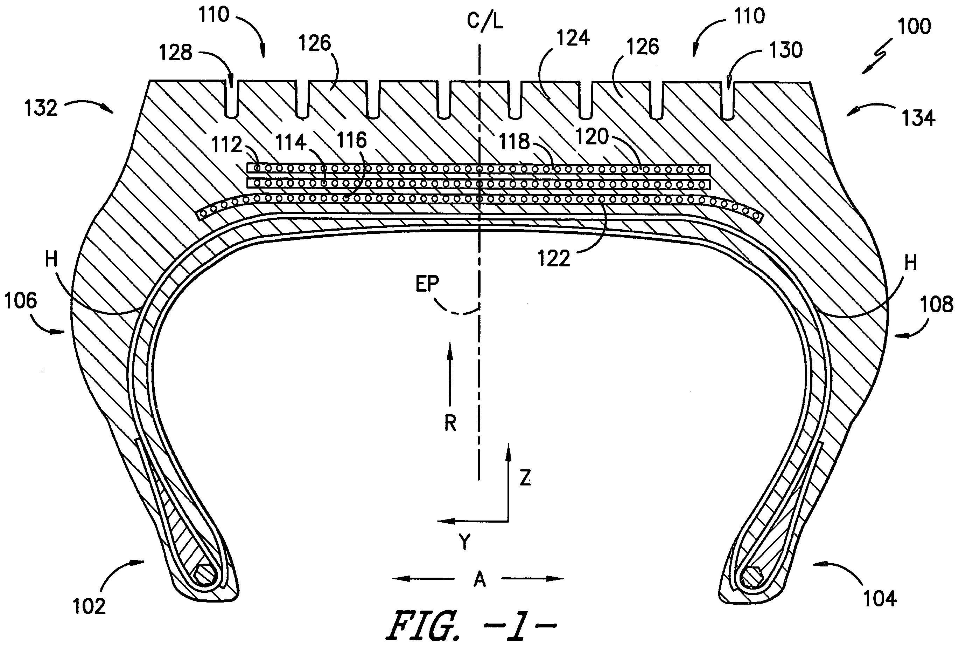

As used herein, the following definitions apply:
"Meridian plane" is a plane within which lies the axis of rotation of the tire. FIG. 1 is a cross-section of an exemplary tire 100 of the present invention taken along a meridian plane. As used herein, the meridian plane includes the y-z plane of a right-handed Cartesian coordinate system where y = 0 is located along the centerline C/L of the tire, and x is perpendicular to the axis of rotation, tangent to the circumference of the tire, and parallel at the point of contact to a flat surface over which the tire is rolling.

The "center line" (C/L) of the tire is a line that bisects the tire, as viewed in the meridian plane, into two halves.

"Equatorial plane" is a plane perpendicular to the meridian plane that bisects the tire along its center line (C/L). As used herein, the equatorial plane EP includes the x-z plane of a Cartesian coordinate system.

The "crown portion" of the tire is the portion that extends along the axial direction A (which is the direction parallel to the axis of rotation of the tire) between the sidewall portions of the tire and includes the tread and components positioned radially inward of the tread. The crown portion and its components extend circumferentially around the tire.

"Body ply" or "carcass" or "carcass ply" is a ply that, as viewed in the meridian plane, extends between and from the bead portions on opposing sides of the tire, through the opposing sidewall portions, and across the crown portion of the tire. As used herein, a body ply has reinforcements such as e.g., cords that are at an angle of 10 degrees or less from the meridian plane.

"Belt ply" is a ply that, as viewed in the meridian plane, is located primarily in the crown portion, radially inward of the tread portion, and radially outward of the body ply. A belt ply does not extend past the shoulder portions of a tire.

"Equilibrium curve" or "curve of the body ply" refers to a model of the shape or geometry of a body ply as viewed in the meridian plane of the tire. The tire, including the body ply, will assume an equilibrium shape when mounted onto a wheel or rim and inflated. An equilibrium curve can be used e.g., to model the shape of the body ply in this equilibrium condition.

"Maximum sidewall pressure" means the maximum inflation pressure of the tire that is typically marked on the tire's sidewall.

The "radial direction" is perpendicular to the axis of rotation of the tire. A Cartesian coordinate system is also employed in the following description where the y-axis is parallel to the axis of rotation and the z-axis is parallel to the radial direction. The "circumferential direction" refers to rotations about the y axis.

"Section width" refers to the greatest overall width of the tire along the axial direction as viewed along a meridian plane, which typically occurs at the tire equator. "Section height" refers to the greatest overall height of the tire along the radial direction as viewed along a meridian plane and typically extends from the bottom of a bead portion to the top of the crown portion.

"Aspect ratio" is the ratio of the tire's section height to its section width as defined by the Tire and Rim Association.

Tires sizes are referred to herein according to conventions published and used by the Tire and Rim Association as will be understood by one of skill in the art.

The use of terms such as belt, bead, and/or ply herein and in the claims that follow does not limit the present invention to tires constructed from semi-finished products or tires formed from an intermediate that must be changed from a flat profile to a profile in the form of a torus.

FIG. 1 provides a cross-section along a meridian plane of an exemplary embodiment of a tire 100 of the present invention. Tire 100 includes a pair of opposing bead portions 102, 104. A pair of opposing sidewall portions 106, 108 is connected with the opposing bead portions 102, 104. A crown portion 110 connects the opposing sidewall portions 106, 108. One or more belt plies 112, 114, and 116 are positioned in crown portion 110. Belt plies 112, 114, and 116 are layers reinforced with elements such as cords 118, 120, and 122 - the cords of each layer forming the same or different angles with the equatorial plane EP (which may also be referred to as the x-z plane if this meridian plane is placed in the y-z plane). In one exemplary embodiment, tire 100 of the present invention includes at least one belt ply having cords or other reinforcements at an angle from the equatorial plane EP of 5 degrees or less. In another exemplary embodiment, a tire of the present invention includes at least one belt ply having cords or other reinforcements that are parallel to the equatorial plane EP - i.e. form an angle of about zero degrees with the equatorial plane EP. These embodiments would include, e.g., a wavy or curvy belt that averages less than 5 degrees over its length or about zero degrees over its length along the circumferential direction C.

At least one exemplary body ply H of the present invention extends between the bead portions 102, 104, passing through opposing sidewall portions 106, 108 and crown portion 110. The body ply contains cords or other reinforcement oriented at angles from the meridian plane typically of 10 degrees or less (i.e. 80 degrees or more from the equatorial plane EP). For example, such reinforcements for the body ply H may include materials that are nominally inextensible such as e.g., metal cable, aramid, glass fibers, and/or carbon fiber components.

A tread portion 124 is located in the crown portion 110 radially outward of the belt plies 112, 114, and 116. Tread portion 124 includes ribs 126 separated by grooves such as first groove 128 and 130 along each shoulder portion 132 and 134. It should be noted that the present invention is not limited to the particular size or appearance of tire 100 shown in FIG 1. Instead, the present invention may also be used with tires having e.g., different widths, aspect ratios, tread features, and belts from what is shown in FIG. 1 - it being understood that tire 100 is provided by way of example only. Additionally, the present invention is not limited to body ply H having an upturn around a bead core as shown for bead portions 102, 104. Instead, other body plies having ends otherwise terminating in bead portions 102, 104 may be used as well.

In one exemplary embodiment, tire 100 has an aspect ratio in the range of 50 to 80. In another exemplary embodiment, tire 100 has a section width in the range of 275 to 455 mm. In still another exemplary embodiment, tire 100 has a section width in the range of 445 to 455 mm. Other dimensions and physical configurations may be used as well.

As stated above, the present invention provides a tire having a more uniform inflation growth - i.e. the growth of the tire as it is inflated - across the entire body ply H of the tire. The extent of uniformity can be specified e.g., through the tire's inflation growth amplitude A, which is defined herein. The inventive tire's uniform inflation growth reduces load sensitivity, reduces or eliminates the break-in period, and/or decreases the propensity for cracking - particularly along one or more groove bottoms in the shoulder region e.g., grooves 128 and/or 130 of the tread portion 124 of tire 100.

In a typical tire manufacturing process, tires are cured in a mold where they take on their final geometry. Conventionally, the body ply is typically designed to be as close to equilibrium as possible in the mold for ease of manufacturing. For the present invention, an inventive body ply H (of which the body ply H in FIG. 1 is one example) is provided that deviates from the conventional equilibrium curve - i.e. the conventional geometry or shape for the body ply. It has been found that this inventive deviation compensates for a structural effect, typical of a reinforced composite, which occurs near the end of the belts in the shoulder portion 132 and/or 134 of the tire. In addition, the inventors discovered that by positioning body ply H such that it deviates, i.e. is displaced from, a conventional equilibrium curve in a particular manner (specified herein as deviation *D*) along the shoulder, sidewall, and bead portions, uniform inflation growth is achieved.

As used herein, the term "inflation growth" can be quantified and understood more fully with reference to the difference between two curves. More particularly, assume that *R* is a reference curve denoting the shape of a body ply in the meridian plane, that *X* is another curve denoting the shape of another body ply in the meridian plane, and that $D_{RX}$ designates the deviation of curve *X* from curve *R* along a direction towards curve *X* from curve *R* that is normal to curve *R* at any given point. Assume also that curves *R* and *X* are coplanar and lie in the same y-r plane in the well-known polar, cylindrical coordinate system. Curves *R* and *X* can be specified in the Cartesian y-z plane because any y-r plane can be rotated into the y-z plane - i.e. the meridian plane as defined herein.

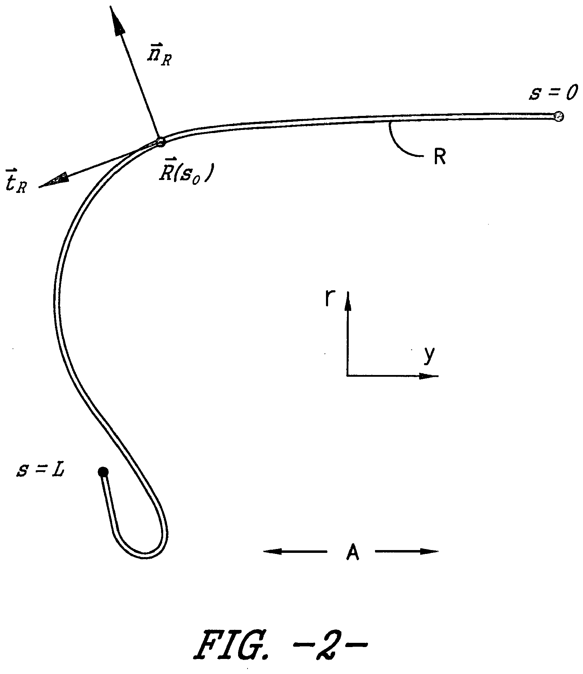

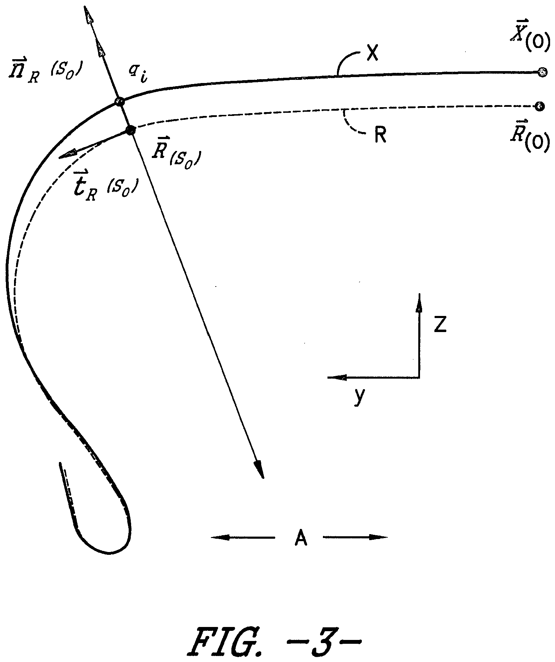

With reference to FIG. 2, reference curve *R* can be parameterized as a function of its curve length *s* by defining $\vec{R} = \vec{R}(s) = [y(s), z(s)]$. Let curve length *s* be defined as a parameter which is an element of the set extending from zero to *L*, that is $s \in [0, L]$, where *L* is the total length of the curve *R* from $s = 0$ (because reference curve *R* can represent a body ply, *L* is also referred to herein as the body ply half-length). This curve has tangent vector $\vec{t}_R = \frac{\partial \vec{R}}{\partial s} = \left[\frac{\partial y}{\partial s}, \frac{\partial z}{\partial s}\right]$ and normal vector $\vec{n}_R = \left[\frac{\partial z}{\partial s}, -\frac{\partial y}{\partial s}\right]$. Accordingly, the distance $D_{RX}(s_0)$ between the curve *R* at the point $R(s_0)$ and curve *X* is defined in the following manner as illustrated in FIG. 3:

1. Locate the point $R(s_0)$ and calculate the normal to the curve $\vec{n}_R(s_0)$ at this point.

2. Create a ray collinear to $\vec{n}_R(s_0)$ that passes through $R(s_0)$. This ray will intersect the curve *X* at a set of points $\{q_i\}$.

3. Define $D_{RX}(s_0)$ as $D_{RX}(s_0) \equiv \min_i \|q_i - R(s_0)\|$, which is the minimum of the Euclidean distance between points $q_i$ and $R(s_0)$. This definition ensures that the closest point will be chosen if the normal ray intersects curve *X* at more than one point.

Continuing with FIG. 3, if curve $X$ represents body ply H (i.e. the shape of body ply H as viewed along a meridian plane) of exemplary tire 100 after inflation and reference curve $R$ represents the body ply H before such inflation, then the inflation growth at any point can be determined as $D_{RX}(s_0) \equiv \min_i \|q_i - R(s_0)\|$ as set forth above. As an example, if tire 100 is cut in the y-z plane (i.e. the meridian plane), body ply H will define a curve $C$ that can be parameterized as a function of its curve length $s: \vec{C} = \vec{C}(s) = [y(s), z(s)]$. Curve $C$ has tangent vector $\vec{t}_C = \frac{\partial \vec{C}}{\partial s} = \left[\frac{\partial y}{\partial s}, \frac{\partial z}{\partial s}\right]$ and normal vector $\vec{n}_C = \left[\frac{\partial z}{\partial s}, -\frac{\partial y}{\partial s}\right]$. Similarly, the interior surface $I$ and exterior surface $E$ of tire 100 can also be described by curves $I(s_1)$ and $E(s_2)$ with normal vectors $\vec{n}_I$ and $\vec{n}_E$, respectively.

Using these definitions, in one exemplary method of the present invention, inflation growth can be measured between a very low pressure state (referred to herein as the "reference pressure") and the desired design pressure of the tire (referred to herein as the "nominal pressure" - which could be e.g., the maximum sidewall pressure). Preferably, the reference pressure is high enough to seat a bead portion 102, 104 of tire 100 on a wheel rim but low enough to avoid otherwise changing the shape of tire 100. More particularly, to keep the boundary conditions unchanged between these two pressure states, for this exemplary method, the position of the bead portion 102, 104 of the tire 100 on the rim is fixed in the position it occupies at the nominal pressure. Such can be accomplished experimentally through the use of an internal bead support, for example, and can also be easily simulated or modeled with e.g., a computer using finite element analysis (FEA) or computer-aided design programs.

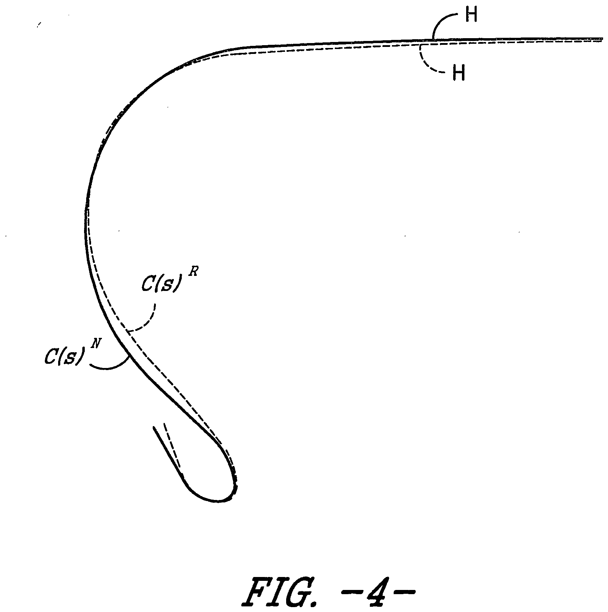

Next, measurements of tire 100 are made that yield the curves $I$, $E$ and/or $C$ at any desired azimuth. For example, the curve $C(s)$ for body ply H can be measured directly (e.g., by x-ray techniques), obtained from a computer model by FEA, or some other measurement method. As illustrated in FIG. 4, the two body ply curves obtained with the above specified boundary conditions can be defined as $C(s)^N$ (the body ply curve at the nominal pressure) and $C(s)^R$ (the body ply curve at the reference pressure). The inflation growth $G(s_0)$ of the body ply at a point $s_0$ is then defined as $G(s_0) \equiv D_{CR(s_0)CN}$.

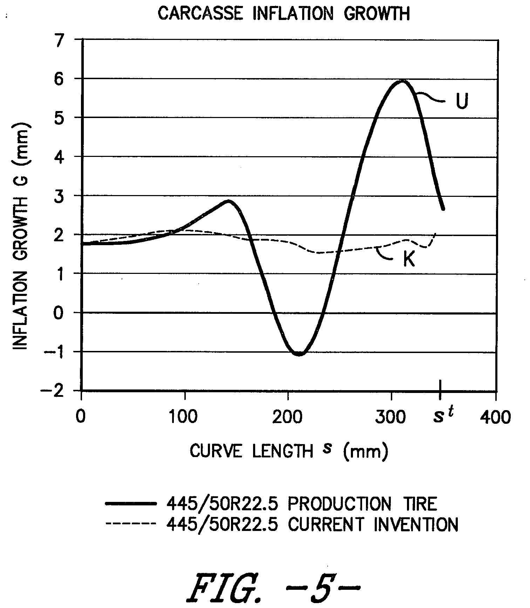

Plot U of FIG. 5 illustrates the results of applying this exemplary method for measuring inflation growth to a conventional 445/50R22.5 WBS tire using FEA at a reference pressure of 0.5 bar and a nominal pressure of 8.3 bar. With y = 0 (and $s$ = 0) at the tire centerline C/L, the tread portion for this conventional tire extends from -195 mm (millimeters) to +195 mm. Plot U illustrates the inflation growth along only one side of the tire (i.e. to the left of the centerline C/L), it being understood that the results would be substantially symmetrical for a tire constructed symmetrically about the tire centerline.

For the production tire, a large peak in plot U occurs at approximately 142 mm along curve length $s$. As the tire is symmetrical, this means that the two peaks occurring at ± 142 mm align closely with the position of the first shoulder groove 120 or 130 of the tread portion 124 and place the groove bottom under strong tensile extension, which greatly facilitates crack nucleation and propagation. This strong growth, coupled with the sharp decrease in growth at the edge of the tread band, acts to bend the crown portion 110 of the tire in the location of the groove 128 or 130. This introduces a hinge point into the crown of the tire at each such point so that the tire bends structurally rather than acting pneumatically - thereby reducing the tire's overall vertical rigidity. This hinge point occurs with or without the presence of a shoulder groove but is particularly problematic when it coincides with the location of a groove in the tread.

Additionally, because the degree of bending at this hinge point is a function of load, the tire's footprint experiences rapid evolution at the shoulders 132 and 134 relative to the center line C/L of the tire as the load changes. For example, at high loads the shoulders 132 and 134 have too much length in contact with the ground relative to the center. Conversely, at lower loads the shoulders 132 and 134 become too short relative to the center; they may even lose contact with the ground entirely at the lowest usage loads. This phenomenon, known as load sensitivity, is undesirable for the even and regular wear of the tread band and results in reduced removal mileage for the tire.

The present invention solves these and others problems by providing for a flat and stable inflation growth curve across the entire body ply H (e.g., from bead portion 102 to bead portion 104) as represented by the exemplary plot K in FIG. 5. These curves end at a point $s_t$, which will be defined herein. The inflation growth of the inventive tire as shown in plot K varies within a narrow range from the tire centerline C/L to a point $s_t$, and without sharp peaks or valleys.

For example, as also shown in FIG. 5, in the sidewall portion (extending from approximately $s$ = 184 mm to $s$ = 256 mm) of the plot U of the conventional tire, the body ply exhibits a significant trough in which inflation growth G becomes negative. This means that the conventional tire pulls radially inward in this region when inflated to the nominal pressure. Because of the large surface area of this annular region, large forces are exerted on the crown portion of the tire, which in turn exerts a large radial force on the shoulder region, resulting in the aforementioned hinge effect. The inventive body ply H of the present invention removes this trough and accompany undesirable internal stresses and enables growth with much smaller changes. More particularly, the present invention provides uniform inflation growth from bead portion 102 to bead portion 104 without the substantial peaks and valleys of the conventional tire constructions. The absence of peaks and valleys in quantified herein with reference to a defined term - inflation growth amplitude $A$.

The exemplary inflation growth represented by plot K is obtained by providing a certain inventive geometry or curve for the exemplary body ply H (along one or both sides of the centerline C/L) of tire 100 as viewed in the meridian plane. The location of this inventive curve for body ply H is specified and claimed herein with reference to the deviation $D$ from a "basis curve" (denoted as BC in the figures) that can be unambiguously constructed for any desired tire. More particularly, the basis curve BC can be unambiguously constructed from measurements of a physical specimen of an actual tire or constructed from one or more models of a tire such as e.g., a computer simulated model or a model from computer aided design (CAD) - as will be understood of one of skill in the art. As such, the basis curve BC is used herein to provide a clear reference for future measurements and for specification of the location of the body ply of the present invention.

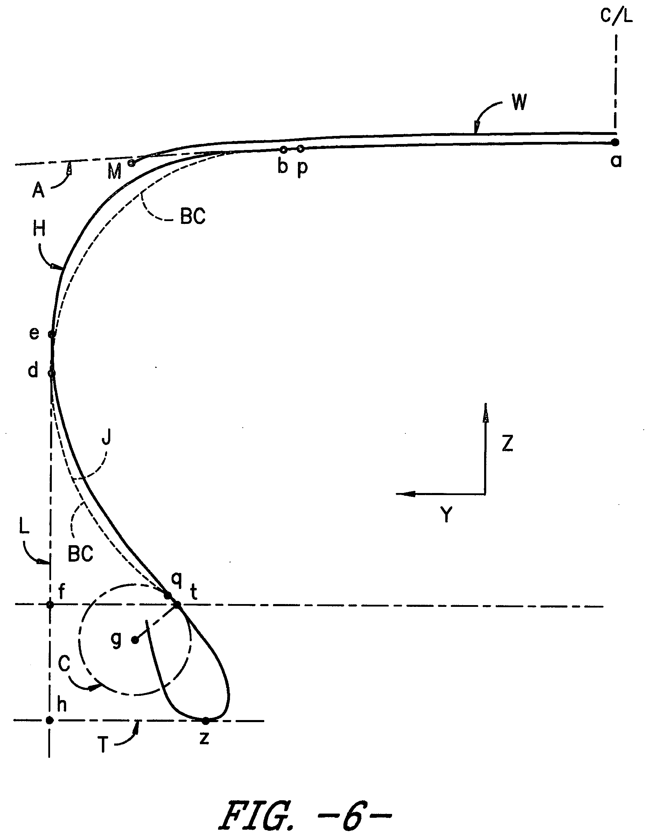

Accordingly, "basis curve" or "basis curve BC" as used in this description and the claims that follow is defined and constructed as will now be set forth with reference to the exemplary profile of a hypothetical tire having a belt ply W and body ply H as shown in FIG. 6. It should be understood that a tire of the present invention may have more than one belt ply. Belt ply W is used to represent the belt ply having the longest belt length along the axial direction - i.e. the widest belt along the y-direction as viewed in the meridian plane. For example, as shown in FIG. 1, belt ply 122 is the widest belt ply and would be represented by belt ply W in FIG. 6. Referring to FIG.6, in addition to the longest belt length along the axial direction, belt ply W is also the longest of the belts having cords or similar reinforcements that are at angle $\alpha$ in the range of about -80 degrees $\leq \alpha \leq$ + 80 degrees with respect to the equatorial plane EP. As such, this definition for belt ply W excludes any belt in the crown portion 110 that may be effectively functioning as a body ply.

As part of the method of constructing the basis curve BC for body ply H (or any other body ply for which a basis curve BC is to be constructed for reference), the shape of body ply H is determined using the shape body ply H assumes when the tire is mounted on the application wheel rim at a reference inflation pressure of 0.5 bar (designated e.g., as $C(s)^R$ in FIG. 4) with such wheel rim providing the boundary conditions as set forth above in the discussion of inflation growth. As stated, in the case of an actual physical specimen of the tire, the shape of body ply H in the meridian plane under such low inflation conditions can be measured experimentally using e.g. X-ray techniques, laser profilometry, or some other measurement method. In the case of a model of the tire such as e.g., a computer generated model, the shape of body ply H in the meridian plane under such low inflation conditions can be determined using e.g., finite element analysis (FEA).

FIG. 6 illustrates the shape of a portion of body ply H of tire 100 as viewed in the meridian plane, and only one half of body ply H is shown. The basis curve, denoted in FIG. 6 as BC, and the remaining description of the invention will be set forth using the left hand side (negative y) of the y-z plane (i.e. the portion of the tire to the left of the centerline C/L as viewed in FIG. 1), it being understood that the invention is symmetric for tire crown portions having symmetric belt architectures (i.e. with respect to a 180° rotation about the z-axis). The application of the procedure described here to non-symmetric belt architectures will be readily understood by one of skill in the art using the teachings disclosed herein. The intersection of body ply H and the y = 0 line defines the point a at the tire centerline C/L. Body ply H can be parameterized in the y-z plane by the curve $C^R(s)$, where $s$ is the curve length measured from point a, which is defined by the intersection of the centerline with the body ply, and the tire has been inflated to the reference pressure as defined above. Clearly $s \in [0, L]$, where L is the body ply half-length (i.e. one-half of the entire length of body ply H as measured along curve $C^R(s)$ in the meridian plane).

Next, considering all belt plies (such as e.g., plies 112, 114, and 116 in FIG. 1) in the crown portion of the tire that have cords at an angle $\alpha$ in the range of about -80 degrees $\leq \alpha \leq$ + 80 degrees with respect to the equatorial plane EP, point M is defined be a point located at the end of the widest of all such belts as viewed in the meridian plane (i.e. belt W for this example), with parameter $s_M$ representing the maximum curvilinear half-width along the axial direction of such belt W in the meridian plane. Additionally, $s_b$ is defined as $s_b = s_M - 65$ mm, and the point b is defined as b = $C^R(s_b)$.

Using the definitions above, basis curve BC is constructed from two parts. Continuing with FIG. 6, the first part of basis curve BC includes an arc of a circle A of crown radius $r_s$ beginning at point a and passing through point b. The crown radius $r_s$ is determined by requiring the arc to be tangent to a horizontal line at point a. Note that this is equivalent to requiring that the center of the circle describing the arc lie on the z axis..

To specify the second part J of basis curve BC, several additional points are now defined for this description and the claims that follow. First, let $s_e$ be the parameter value for which body ply H takes on its minimum value in y, and let $s_z$ be the parameter value for which body ply H takes on its minimum value in z. The equator point e is defined as e = $C^R(s_e)$ = $(y_e, z_e)$ and the point z is defined as z = $C^R(s_z)$ = $(y_z, z_z)$.

L is defined a vertical line passing through point e. Point h, which is h = $(y_h, z_h)$, is the intersection between a horizontal line T passing through point z and line L. It should be noted that point h does not in general lie on body ply H. Define distance n as n = $\|e - h\|$ i.e., the Euclidean distance between points e and h.

Now an intermediate point f, not necessarily on the body ply H, is defined with respect to point h as f = $(y_h, z_h$

+ 0.3*n). A horizontal line is constructed through point f and its point of intersection with body ply H is defined as point t, which occurs at parameter $s_t$ so that t = $C^R(s_t)$. A circle C is constructed with a radius of 20 mm that is also tangent to the body ply at point t. The center of the circle is defined to be the point g located 20 mm from body ply H along the line defined by the normal to the body ply $\vec{n}_C^R(s_t)$ at point t.

Accordingly, the second part of the basis curve BC includes a radial equilibrium curve J in a manner that can be readily determined in the following manner. As will be understood by one of skill in the art, a radial equilibrium curve is characterized by 2 parameters: $r_c$, the center radius, and $r_e$, the equator radius. Here r is the usual cylindrical polar radial coordinate and is equal to z when in the y-z plane. The radial equilibrium curve can be described by a differential equation and can also be unambiguiously constructed starting from the center radius by calculating the tangent angle $\varphi$ and curvature $\kappa$ of the curve at each subsequent radius. The expressions for the tangent angle and curvature for a radial equilibrium curve are well known and are given as follows:

<div align="center">Equations 1 and 2</div>

$$\sin\varphi = \frac{\left(r^2 - r_e^2\right)}{\left(r_c^2 - r_e^2\right)} \qquad \kappa = \frac{2r}{\left(r_c^2 - r_e^2\right)}$$

To uniquely determine the parameters $r_s$ and $r_\varepsilon$ of radial equilibrium curve J, a tri-tangency condition is imposed. First, radial equilibrium curve J must be tangent to arc A. The point of tangential intersection of these two curves will occur at a point p ≠ b in general. The point b is projected in a fashion perpendicular to the reference curve for body ply H onto the basis curve BC to obtain its equivalent. Typically the point p will intersect the arc laterally outward of point b, in which case this projection is unnecessary as it simply yields the original point b, The second requirement of tri-tangency is that the radial equilibrium curve J and the line L must be tangent to each other, which occurs at a point designated as point d in FIG. 6. In general, the point of tangency d ≠ e. The third requirement of tri-tangency is that the radial equilibrium curve J must be tangent to circle C, which occurs at point q as shown in FIG. 6 and referenced in the claims that follow. As also referenced in the claims that follow, point q occurs at curve length $s_q$ along body ply H. In general, this point of tangency q ≠ t. These constraints uniquely determine the radial equilibrium curve J.

Accordingly, basis curve BC is defined to be the union of the arc segment A from a to p with the radial equilibrium curve J between points p and q, i.e. basis curve BC = A ∩ J. The values of $r_c$ and $r_e$ for the radial equilibrium curve can be determined by many means known to one of ordinary skill in the art. For example, one method would be to begin by taking $r_c = z_b$ and $r_e = z_e$ and then iterating to find a solution.

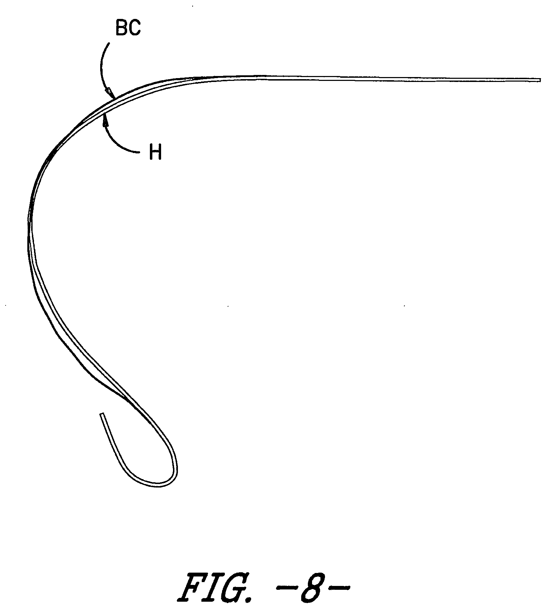

Referring now to FIG. 8, the above definition is used to construct a basis curve BC for exemplary body ply H. As shown, the new geometry or shape of the exemplary body ply H of the present invention differs substantially from the shape of the basis curve BC along the shoulder and sidewall regions of tire 100 under reference pressure conditions. This inventive geometry of the exemplary body ply H can be delineated by specifying its deviation, $D_{BC-H}$, from the basis curve BC parametrically as, a function of curve length s as will be described.

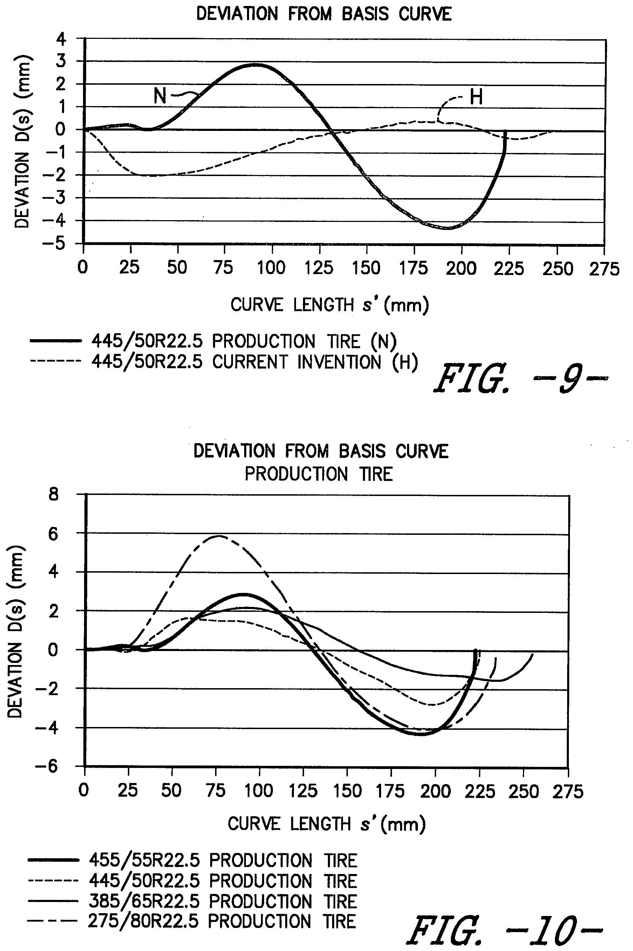

By introducing a shifted parameter s' = s - $s_b$, it can also be observed that the inventive new body ply H deviates in a systematic manner from conventional tires as the width of the tires change. As illustrated in FIG. 9, the deviation D(s') of the inventive body ply H from basis curve BC is novel and distinctive as compared to the deviation D(s') from the basis curve BC of a body ply N for a conventional tire. For example, not only is the magnitude of the absolute value of the deviation D(s') for inventive body ply H different, the direction of deviation from the basis curve BC for inventive body ply H is opposite to that of the conventional body ply N. More particularly, for significant portions along its length s, inventive body ply H is located on a different side of the basis curve BC than the body ply N for the conventional tire.

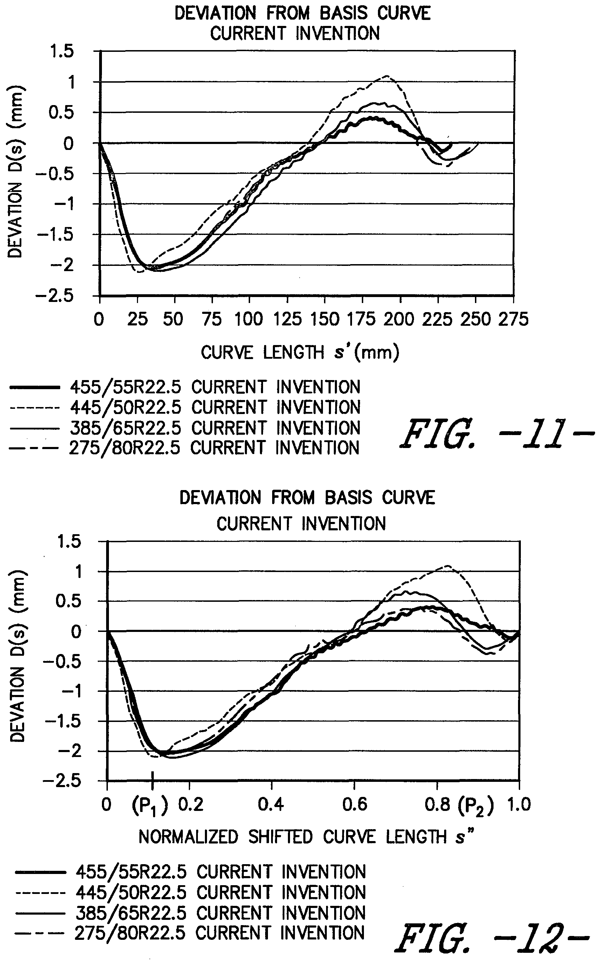

FIG. 10 illustrates deviation D(s') of four conventional tires plotted as a function of the shifted parameter s'. As shown, deviation D(s') is different for each of the four conventional tires. By way of comparison, FIG. 11 illustrates deviation D(s') for the same four tire sizes as used in FIG. 10 equipped, however, with inventive body ply H. As shown, deviation D(s') is systematic and, for certain portions of s', on an opposite side of basis curve BC from the conventional body plies of the same tire sizes.

Additionally, with reference to FIG. 11, the inventors discovered that the form of the curves shown are constant and alignment between all tires sizes results when the deviation from the basis curve BC is plotted as a function of a normalized and shifted parameter s'', defined as follows:

## Equation 3

$$s'' = \frac{s - s_b}{s_q - s_b}$$

where $s_b$ = the value of the parameter $s$ at point b, previously defined
as $s_M$ - 65 mm
$s_q$ = the value of parameter $s$ at point q, as previously defined.

The use of the parameter $s''$ normalizes e.g., the deviation for tires of different tread widths, section widths and rim dimensions.

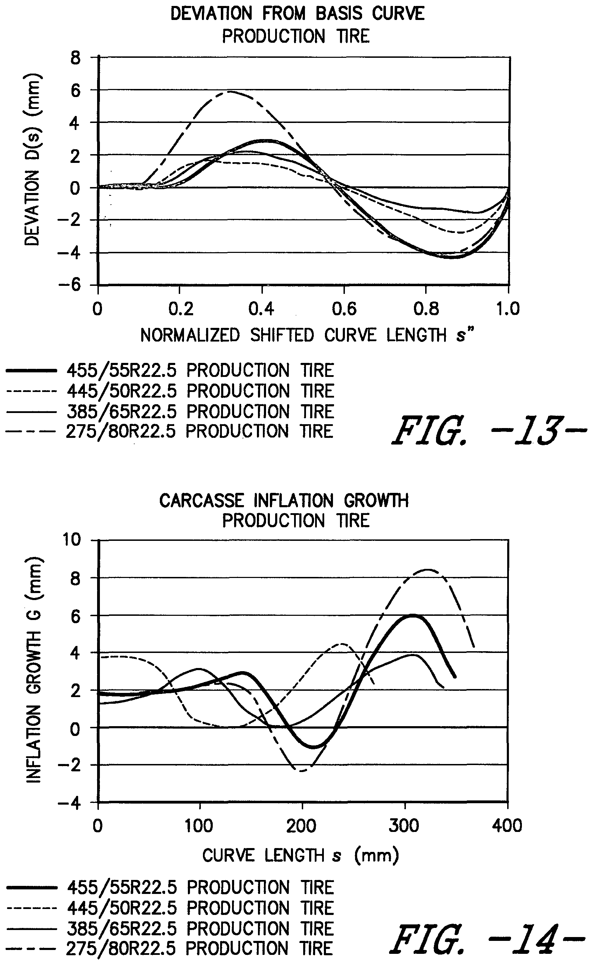

As shown in FIG. 12, plots of the deviation $D(s')$ as a function of $s''$ reveals an alignment between four tires of different sizes provided within the body ply H of the present invention. By comparison, FIG. 13 provides plots of deviation $D(s'')$ as a function of $s''$ of four conventional tires of the same size without inventive body ply H. Similar to the above discussion, the direction and magnitude of the deviation $D(s'')$ is different for tires having the inventive body ply H as compared to the conventional tires of the same size.

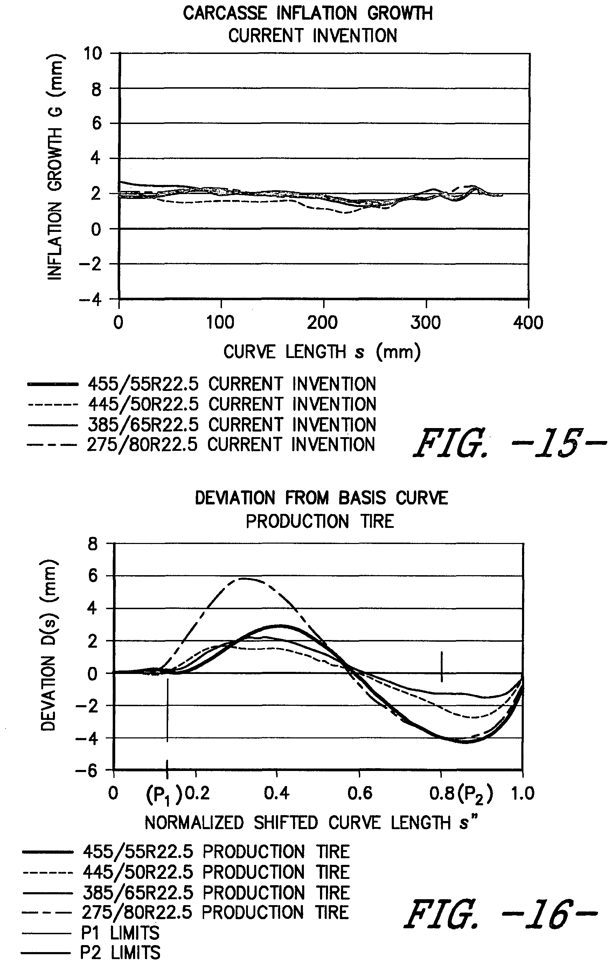

Importantly, the inventive body ply H results in the desired uniform inflation growth $G$. FIG. 14 is a plot of inflation growth $G$ (in mm) for the same four conventional tires as used in FIGS. 10 and 13. As shown, inflation growth $G$ is not uniform over the curve length $s$ for these conventional tires. By comparison, FIG. 15 provides plots of inflation growth $G$ for the same tires sizes equipped with the inventive body ply H. Each tire has uniform inflation growth over the entire length $s$ of the inventive body ply H.

Returning to FIG. 12, the inventors discovered that the plot of deviation $D(s'')$ reveals two key locations along the inventive body H corresponding to the minimum and maximum peaks in the plots:

$P_1$, which occurs at s" =0.13
$P_2$, which occurs at s" = 0.8

Using equation 2 above and substituting for $s_b = s_M$ - 65 mm leads to following for points $P_1$ and $P_2$ along curve length $s$ of body ply H where for its deviation $D(s'')$ from basis curve BC:

## Equation 4

$$P_1 \text{ occurs at } s = 0.13 s_q + 0.87 s_M - 56.6 \qquad \text{(units in mm)}$$

## Equation 5

$$P_2 \text{ occurs at } s = 0.8 s_q + 0.2 s_M - 13 \qquad \text{(units in mm)}$$

By maintaining the deviation $D(s)$ from basis curve BC at points $P_1$ and $P_2$ within a specified range, the desired uniform inflation growth $G$ for the inventive body ply H can be obtained. More particularly, at point $P_1$ the deviation $D(s)$ from the basis curve should be maintained within a range of - 4.25 mm $\leq D(s) \leq$ - 0.5 mm, and at point $P_2$ the deviation $D(s)$ from the basis curve should be maintained within a range of - 0.5 mm $\leq D(s) \leq$ 1.25 mm. As used herein, the expression of a range of for $D(s)$ includes the endpoints of the specified range.

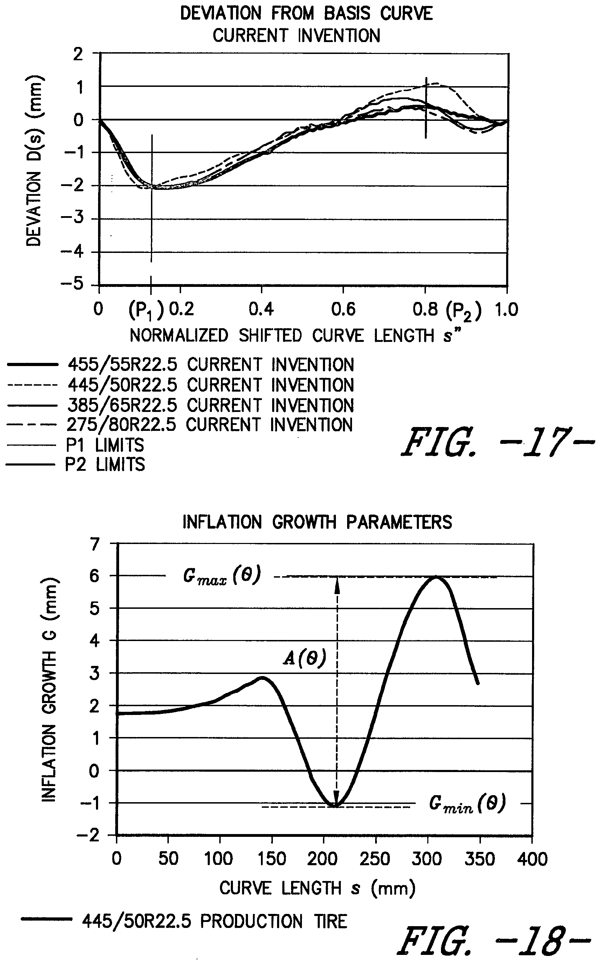

FIG. 16 illustrates a plot of deviation, $D(s'')$ for the four conventional tires previously referenced in FIGS. 10, 13, and 14. As shown, the body ply of these four conventional tires falls outside the specified ranges of deviation $D$ for $P_1$ and $P_2$. FIG. 17 shows the same tire sizes constructed with the inventive body ply H. The deviation $D(s'')$ falls well within the specified ranges for deviation $D$ at $P_1$ and $P_2$.

By constructing a tire within an inventive body ply H having deviation $D$ as specified, uniform inflation growth $G$ from bead portion 102 to bead portion 104 is obtained. For obtaining the benefits of the invention, the magnitude of inflation growth $G$ is not critical. Instead, the absence of peaks and valleys is important. Recalling that the value of the distance parameter at point t is $s_t$ as set forth above, the maximum, minimum, and amplitude of inflation growth $G$ over the region from - $s_t$ to $s_t$ at a given azimuthal angle $\theta$ is defined as follows:

Equation 6

$$G_{max}(\theta) = \max_{s \in [-s_t, s_t]} G(s, \theta)$$

Equation 7

$$G_{min}(\theta) = \min_{s \in [-s_t, s_t]} G(s, \theta)$$

Equation 8

$$A(\theta) = G_{max}(\theta) - G_{min}(\theta)$$

$G_{max}(\theta)$ is the maximum inflation growth $G$ found between parameter points - $s_t$ and $s_t$ at a given angle $\theta$. Similarly, $G_{min}(\theta)$ is the minimum inflation growth found between parameter points -$s_t$ and $s_t$ at a given angle θ. $A(\theta)$ is the amplitude of the inflation growth at angle $\theta$ and is the difference between $G_{max}(\theta)$ and $G_{min}(\theta)$. This is illustrated in FIG. 18 using the conventional tire from FIG. 5 by way of example.

Finite element calculations of inflation growth $G$ are typically 2d axisymmetric simulations, predicting the same amplitude $A$ at all azimuthal angles $\theta$. For physical tire measurements, however, inflation growth $G$ can vary from azimuth to azimuth around the tire. Accordingly, as used in the claims that follow, the final amplitude measurement is defined herein as an average of n ≥ 4 evenly spaced azimuthal measurements in the following fashion:

Equation 9

$$A \equiv \frac{1}{n} \sum_{i=0}^{n-1} A \left( \theta = \frac{360°}{n} i \right)$$

Using equations 6, 7, and 9, the following results were calculated using the four conventional tires previously referenced as well as tires of the same size equipped with a body ply H of the present invention:

TABLE I

|  | 455/45822.5 Production Tire | 455/45R22.5 Current invention | 445/50R22.5 Production Tire | 445/50R22.5 Current Invention | 385/60R22.5 Production Tire | 385/60R22.5 Current invention | 275/80RGR32.5 Production Tire | 275/80R22.5 Current invention |
|---|---|---|---|---|---|---|---|---|
| Gmax | 3.4 | 2.4 | 5.9 | 2.3 | 3.8 | 2.7 | 4.3 | 2.2 |
| Gmin | -2.3 | 1.5 | -1.1 | 1.5 | 0.0 | 1.4 | 0.0 | 0.9 |
| A | 10.7 | 0.9 | 7.0 | 0.8 | 3.8 | 1.3 | 4.3 | 1.3 |

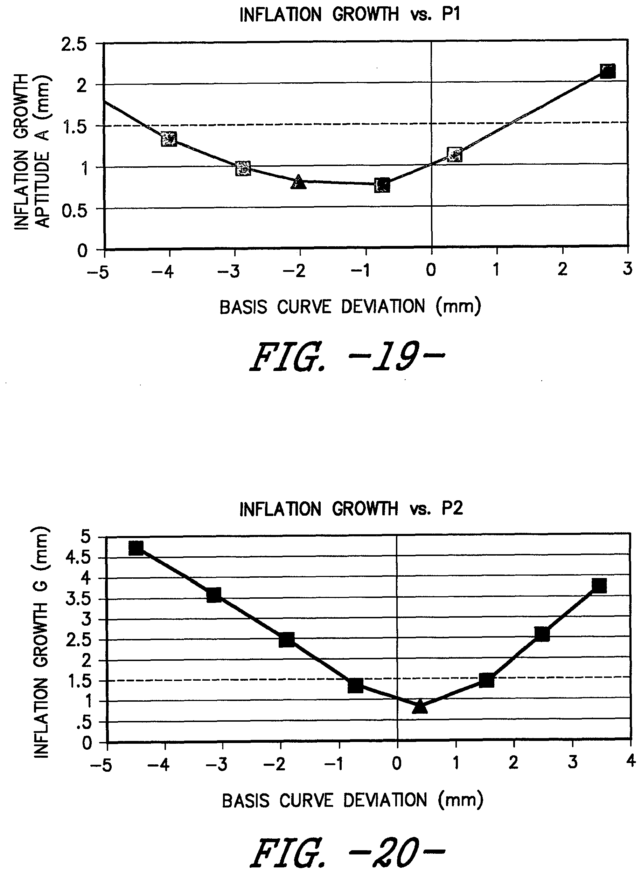

In one exemplary embodiment of the invention, when constructed with such a body ply H, tire 100 has an inflation growth amplitude *A* that is less than, or equal to, about 1.5 mm when the tire is inflated from a pressure of about 0.5 bar to about the maximum sidewall pressure. FIGS. 19 and 20 provide plots of $P_1$ and $P_2$ as function of deviation from the basis curve in units of millimeters (mm). As shown, the inflation growth amplitude *A* is less than, or equal to, about 1.5 mm when the deviation *D(s)* from the basis curve BC at point $P_1$ is maintained within the range of $- 4.25$ mm $\leq D(s) \leq - 0.5$ mm and the deviation *D(s)* from the basis curve BC at point $P_2$ is maintained within the range of $- 0.5$ mm $\leq D(s) \leq 1.25$ mm.

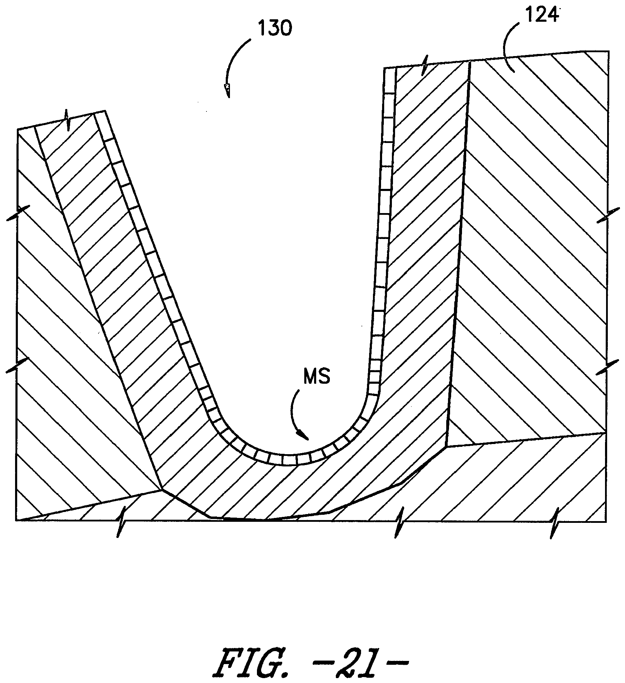

The efficacy of the new invention was also demonstrated by a shoulder groove cracking simulation performed using the same four tire sizes. Specially prepared FEA models were generated for this purpose in which the mesh density was drastically increased along the shoulder groove bottoms (Fig. 10). A rolling simulation on flat ground was carried out with the tire pressure at 8.3b and the load at 3680 Kg. The P1 (first principal) Cauchy stress for each element is calculated in the shoulder grooves at each azimuth as the tire makes a rotation and the maximum P1 stress is extracted for the rolling cycle. FIG. 21 shows the location where the maximum stress MS occurred and Table II provides the results. As will be understood by one of skill in the art, Cauchy stress is widely used as an indicator for groove bottom cracking. In Tables I and Table II as well as the figures, "production tire" refers to a conventional tire constructed without the inventive body ply while "current invention" refers to an exemplary embodiment of a tire constructed with an inventive body ply H of the present invention.

**TABLE II**

| | 455/45R22.5 Production Tire | 455/45R22.5 Current invention | 445/50R22.5 Production Tire | 445/50R22.5 Currant Invention | 365/65R22.5 Production Tire | 385/65R22.5 Current invention | 275/80R22.5 Production Tire | 275/80R22.5 Current invention |
|---|---|---|---|---|---|---|---|---|
| Max P1 | 8.6 | 0.3 | 7.0 | 6.3 | 5.0 | 0.6 | 2.6 | 0.1 |

The present invention also provides for an exemplary method of designing or constructing tire 100. Such method could be used to improve the body ply for an existing tire design or could be used in creating a new tire design. In either case, for this exemplary method, the designer would begin by creating a model of the tire that includes a reference curve representing the shape of the body ply along a meridian plane when the tire is inflated to a reference pressure, wherein s is a length in mm along the reference curve from a centerline of the tire. For an existing tire, the reference curve could be created as described above using existing CAD drawings or by using physical measurements of a specimen of the tire subjected, e.g., X-ray, laser profilometry, or other techniques. For a new tire design, the reference curve could be created from e.g., CAD models or other computer models of the tire. The reference pressure could be e.g., 0.5 bar or other pressures.

Next, a basis curve BC is constructed for the tire based upon the reference curve of the tire at the reference pressure. The basis curve BC is constructed e.g., as previously described.

Using the basis curve BC, a target reference curve (which can be described by *R(s)* as set forth above via equations 4 and 5) is created for the shape of the body ply along the meridian plane. This target reference curve is the desired curve or geometry for the new body ply - such as e.g., the exemplary body ply H discussed above - to be used in the tire.

The target reference curve is created by repositioning the reference curve to have a deviation *D(s)* from the basis curve BC that is in the range of - 4.25 mm $\leq D(s) \leq$ - 0.5 mm at point $P_1$ and in the range of - 0.5 mm $\leq D(s) \leq$ 1.25 mm at a point $P_2$, where $P_1$ and $P_2$ are located along the target reference curve as set forth in equations 4 and 5 above, respectively.

The target reference curve could be created by repositioning the reference curve on one or both sides of the tire centerline as well.

For an existing tire, the design would be changed to include the new shape of the body ply. This would include changes to manufacture the tire having the new body ply. For a newly designed tire, the design would include the new profile or curve for the body ply. Accordingly, the present invention includes tires constructed and manufactured having the new inventive body ply providing for uniform inflation growth *G* as described herein.

**Claims**

1. A tire (100) defining a radial direction (z), an axial direction (y), and a tire centerline (C/L), the tire (100) comprising:

   a pair of opposing bead portions (102, 104);
   a pair of opposing sidewall portions (106, 108) connected with the opposing bead portions (102, 104);
   a crown portion (110) connecting the opposing sidewall portions (106, 108);
   at least one body ply (H) extending between the bead portions (102, 104) and through the sidewall (106, 108) and crown portions (110), the body ply (H) having a curve along a meridian plane which includes the y-z plane, wherein s is the length in mm along the curve from centerline (C/L) of the tire (100); and
   one or more belt plies (112, 114, 116) positioned in the crown portion (110), wherein $s_M$ is one-half of the maximum curvilinear width, along the axial direction (y), of the widest belt of the one or more belt plies (112, 114, 116) having an angle $\alpha$ in the range of - 80 degrees $\leq \alpha \leq$ + 80 degrees with respect to an equatorial plane of the tire (100) which includes the x-z plane;
   **characterized in that**
   when a basis curve (BC) along the meridian plane having three points of tangency p, d, and q is constructed for the body ply (H), along at least one side of the tire centerline (C/L) the body ply (H) has

   i) a deviation D(s) from the basis curve in the range of - 4.25 mm $\leq$ D(s) $\leq$ 0.5 mm at a point $P_1 = 0.13s_q + 0.87s_M$ - 56.6 mm, and
   ii) a deviation D(s) from the basis curve in the range of - 0.5 mm $\leq$ D(s) $\leq$ 1.25 mm at a point $P_2 = 0.8s_q + 0.2 s_M$ - 13 mm;
   where $s_q$ is the length along the curve of the basis curve (BC) at which point q occurs, where the basis curve (BC) is constructed as following:

   the shape of body ply H is determined using the shape the body ply (H) assumes when the tire is mounted on an application wheel rim at a reference inflation pressure of 0.5 bar,
   with the intersection of the body ply (H) and the y = 0 line defining the point a at the tire centerline C/L, the body ply (H) is parameterized in the y-z plane by the curve $C^R(s)$, where s is the curve length measured from point a which is defined by the intersection of the centerline with the body ply (H), s $\in$ [0, L], where L is one-half of the entire length of body ply (H) as measured along curve $C^R(s)$ in the meridian plane,

considering all belt plies (112, 114, 116) in the crown portion (110) of the tire (100) that have cords at an angle $\alpha$ in the range of about -80 degrees $\leq \alpha \leq$ + 80 degrees with respect to the equatorial plane (EP), point M is defined to be a point located at the end of the widest of all such belts as viewed in the meridian plane, with parameter $s_M$ representing the maximum curvilinear half-width along the axial direction (y) of such a belt in the meridian plane,

$s_b$ is defined as $s_b = s_M$ - 65 mm, and the point b is defined as $b = C^R(s_b)$,

the basis curve (BC) is constructed from two parts,

the first part of the basis curve (BC) includes an arc of a circle A of crown radius $r_s$ beginning at point a and passing through point b,

the crown radius $r_s$ is determined by requiring the arc to be tangent to a horizontal line at point a,

for the second part J of the basis curve (BC):

$s_e$ is the parameter value for which body ply (H) takes on its minimum value in y, and $s_z$ is the parameter value for which body ply (H) takes on its minimum value in z,

the equator point e is defined as $e = C^R(s_e) = (y_e, z_e)$ and the point z is defined as $z = C^R(s_z) = (y_z, z_z)$,

L is defined as a vertical line passing through point e,

point h, which is $h = (y_h, z_h)$, is the intersection between a horizontal line T passing through point z and line L, point h does not in general lie on body ply (H),

distance n is defined as $n = \|e - h\|$ the Euclidean distance between points e and h,

an intermediate point f, not necessarily on the body ply (H), is defined with respect to point h as $f = (y_h, z_h + 0.3 \cdot n)$,

a horizontal line is constructed through point f and its point of intersection with body ply (H) is defined as point t, which occurs at parameter $s_t$ so that $t = C^R(s_t)$,

a circle C is constructed with a radius of 20 mm that is also tangent to the body ply at point t,

the center of the circle is defined to be the point g located 20 mm from the body ply (H) along the line defined by the normal to the body ply $\tilde{n}^R{}_C(s_t)$ at point t,

accordingly, the second part of the basis curve (BC) includes a radial equilibrium curve J **characterized by** $r_c$, the center radius, and $r_e$, the equator radius,

r is the usual cylindrical polar radial coordinate and is equal to z when in the y-z plane,

the radial equilibrium curve can be described by a differential equation and can also be unambiguously constructed starting from the center radius by calculating the tangent angle $\varphi$ and curvature $\kappa$ of the curve at each subsequent radius,

the expressions for the tangent angle and curvature for a radial equilibrium curve are $\sin \varphi = (r^2 - r^2{}_c)/(r^2{}_c - r^2{}_e)$ and $K = 2r/(r^2{}_c - r^2{}_e)$,

the radial equilibrium curve J must be tangent to arc A,

the point of tangential intersection of these two curves will occur at a point $p \neq b$ in general,

the point b is projected in a fashion perpendicular to the reference curve for the body ply (H) onto the basis curve (BC) to obtain its equivalent,

typically the point p will intersect the arc laterally outward of point b, in which case this projection is unnecessary as it simply yields the original point b,

the radial equilibrium curve J and the line L must be tangent to each other, which occurs at a point designated as point d,

in general the point of tangency $d \neq e$,

the radial equilibrium curve J must be tangent to circle C, which occurs at point q which occurs at curve length $s_q$ along body ply (H),

in general this point of tangency $q \neq t$,

accordingly, basis curve (BC) is defined to be the union of the arc segment A from a to p with the radial equilibrium curve J between points p and q,

the values of $r_c$ and $r_c$ for the radial equilibrium curve can be determined by taking $r_c = z_b$ and $r_e = z_e$ and then iterating to find a solution.

2. The tire (100) of claim 1, wherein the tire (100) has a maximum sidewall pressure, and wherein the tire has an inflation growth amplitude A, as defined by the value of the distance parameter at point t which is $s_t$, the maximum, minimum and amplitude of an inflation growth (G) over the region from $-s_t$ to $s_t$ at a given azimuthal angle $\theta$ is defined as

$$G_{max}(\theta) = \max_{s\in[-st,st]} G(s, \theta),$$

$$G_{min}(\theta) = min_{s\epsilon[-st,st]}G(s, \theta),$$

$$A(\theta) = G_{max}(\theta) - G_{min}(\theta),$$

inflation growth G(s0) of the body ply at a point s0 is defined as $G(s0) \equiv D_{CR(s0)CN}$ where $C^R(s0)$ is the body ply curve at the reference pressure and $C^N$ is the body ply curve at the nominal pressure,
$G_{max}(\theta)$ is the maximum inflation growth G found between parameter points $-s_t$ and $s_t$ at a given angle $\theta$,
$G_{min}(\theta)$ is the minimum inflation growth found between parameter points $-s_t$ and $s_t$ at a given angle $\theta$, $A(\theta)$ is the amplitude of the inflation growth at angle $\theta$ and is the difference between $G_{max}(\theta)$ and $G_{min}(\theta)$,
final amplitude measurement is defined herein as an average of $n \geq 4$ evenly spaced azimuthal measurements,

$$A \equiv 1/n \; \Sigma^{n-1}_{i=0}A(\theta = 360°i/n),$$

that is less, or equal to, about 1.5 mm when the tire (100) is inflated from a pressure of about 0.5 bar to about the maximum sidewall pressure.

3. The tire (100) of claim 1, wherein when the basis curve (BC) along the meridian plane having three points of tangency p, d, and q is constructed for the body ply (H), along both sides of the tire centerline (C/L) the body ply (H) has

   i) a deviation D(s) from the basis curve (BC) in the range of $- 4.25 \text{ mm} \leq D(s) \leq 0.5 \text{ mm}$ at a point $P_1 = 0.13s_q + 0.87s_M - 56.6 \text{ mm}$, and
   ii) a deviation D(s) from the basis curve (BC) in the range of $- 0.5 \text{ mm} \leq D(s) \leq 1.25 \text{ mm}$ at a point $P_2 = 0.8s_q + 0.2s_M - 13 \text{ mm}$;

   where $s_q$ is the length along the curve of the basis curve (BC) at which point q occurs.

4. The tire (100) of claim 1, wherein the at least one body ply (H) comprises a plurality of reinforcements forming an angle of 80 degrees or more from an equatorial plane of the tire (100) along the crown portion (110).

5. The tire (100) of claim 1, wherein at least one belt ply (122, W) comprises reinforcements forming an angle of 5 degrees or less from an equatorial plane of the tire (100) along the crown portion (110).

6. The tire (100) of claim 1, wherein at least one belt ply (122, W) comprises reinforcements forming an angle of about 0 degrees from an equatorial plane of the tire (100) along the crown portion (110) .

7. The tire (100) of claim 1, wherein the tire has an aspect ratio in the range of 50 to 80.

8. The tire (100) of claim 7, wherein the tire (100) has a section width in the range of 275 mm to 455 mm

9. The tire (100) of claim 1, wherein when the body ply (H) is represented by a curve C(s) in the meridian plane and L is the body ply half-length, L is in the range of about 60 mm to about 222 mm.

10. A method of tire construction, the tire (100) including a centerline (C/L) and a pair of opposing bead portions (102, 104), a pair of opposing sidewall portions (106, 108) connected with the opposing bead portions (102, 104), a crown portion (100) connected with, and extending along an axial direction (y) between, the opposing sidewall portions (106, 108), at least one body ply (H) extending between the bead portions (102, 104) and through the crown portion (100) and sidewall portions (106, 108), at least one belt ply (122, W) located in the crown portion (110), the at least one belt ply (122, W) being the widest belt ply along the axial direction (y) of the tire (100) having an angle $\alpha$ in the range of -80 degrees $\leq \alpha \leq$ + 80 degrees with respect to an equatorial plane of the tire (100) which includes the x-z plane, the method of tire construction comprising the steps of:

   creating a model of the tire (100) that includes a reference curve representing the shape of the body ply (H) along a meridian plane which includes the y-z plane when the tire (100) is inflated to a reference pressure, wherein s is a length in mm along the reference curve from a centerline (C/L) of the tire (100);
   constructing a basis curve (BC) along the meridian plane for the tire (100) based upon the reference curve of the tire (100) at the reference pressure, the basis curve (BC) having three points of tangency p, d, and q;
creating a target reference curve for the shape of the body ply (H) along the meridian plane by repositioning the reference curve to have, along at least one side of the tire centerline (C/L),

i) a deviation D(s) from the basis curve (BC) in the range of - 4.25 mm $\leq$ D(s) $\leq$ 0.5 mm at a point $P_1$ = $0.13s_q + 0.87s_M$ - 56.6 mm, and
ii) a deviation D(s) from the basis curve (BC) in the range of - 0.5 mm $\leq$ D(s) $\leq$ 1.25 mm at a point $P_2$ = $0.8s_q + 0.2 s_M$ - 13 mm;
where $s_q$ is the length along the curve of the basis curve (BC) at which point q occurs, where the basis curve (BC) is constructed as following:

the shape of body ply H is determined using the shape body ply (H) assumes when the tire is mounted on an application wheel rim at a reference inflation pressure of 0.5 bar,
the intersection of the body ply (H) and the y = 0 line defining the point a at the tire centerline C/L,
the body ply (H) is parameterized in the y-z plane by the curve $C^R(s)$, where s is the curve length measured from point a which is defined by the intersection of the centerline with the body ply (H), s $\in$ [0, L], where L is one-half of the entire length of body ply (H) as measured along curve $C^R(s)$ in the meridian plane,
considering all belt plies (112, 114, 116) in the crown portion (110) of the tire (100) that have cords at an angle $\alpha$ in the range of about -80 degrees $\leq \alpha \leq$ + 80 degrees with respect to the equatorial plane (EP), point M is defined to be a point located at the end of the widest of all such belts as viewed in the meridian plane, with parameter $s_M$ representing the maximum curvilinear half-width along the axial direction of such a belt in the meridian plane,
$s_b$ is defined as $s_b = s_M$ - 65 mm, and the point b is defined as b = $C^R(s_b)$,
the basis curve (BC) is constructed from two parts,
the first part of the basis curve (BC) includes an arc of a circle A of crown radius $r_s$ beginning at point a and passing through point b,
the crown radius $r_s$ is determined by requiring the arc to be tangent to a horizontal line at point a,
for the second part J of the basis curve (BC):

$s_e$ is the parameter value for which body ply (H) takes on its minimum value in y, and $s_z$ is the parameter value for which body ply (H) takes on its minimum value in z,
the equator point e is defined as e = $C^R(s_e)$ = $(y_e, z_e)$ and the point z is defined as z = $C^R(s_z)$ = $(y_z, z_z)$,
L is defined as a vertical line passing through point e,
point h which is h = $(y_h, z_h)$ is the intersection between a horizontal line T passing through point z and line L, point h does not in general lie on body ply (H),
distance n is defined as n = lle - hll the Euclidean distance between points e and h,
an intermediate point f, not necessarily on the body ply (H), is defined with respect to point h as f = $(y_h, z_h + 0.3*n)$,
a horizontal line is constructed through point f and its point of intersection with body ply (H) is defined as point t, which occurs at parameter $s_t$ so that t = $C^R(s_t)$,
a circle C is constructed with a radius of 20 mm that is also tangent to the body ply at point t,
the center of the circle is defined to be the point g located 20 mm from the body ply (H) along the line defined by the normal to the body ply $\tilde{n}^R_C(s_t)$ at point t,
accordingly, the second part of the basis curve (BC) includes a radial equilibrium curve J **characterized by** $r_c$, the center radius, and $r_e$, the equator radius,
r is the usual cylindrical polar radial coordinate and is equal to z when in the y-z plane,
the radial equilibrium curve can be described by a differential equation and can also be unambiguously constructed starting from the center radius by calculating the tangent angle $\varphi$ and curvature $\kappa$ of the curve at each subsequent radius,
the expressions for the tangent angle and curvature for a radial equilibrium curve are sin $\varphi$ = $(r^2 - r^2_e)/(r^2_c - r^2_e)$ and $\kappa = 2r/(r^2_c - r^2_e)$,
the radial equilibrium curve J must be tangent to arc A,
the point of tangential intersection of these two curves will occur at a point p $\neq$ b in general,
the point b is projected in a fashion perpendicular to the reference curve for the body ply (H) onto the basis curve (BC) to obtain its equivalent,
typically the point p will intersect the arc laterally outward of point b, in which case this projection is unnecessary as it simply yields the original point b,

the radial equilibrium curve J and the line L must be tangent to each other, which occurs at a point designated as point d,

in general the point of tangency $d \neq e$,

the radial equilibrium curve J must be tangent to circle C, which occurs at point q which occurs at curve length $s_q$ along body ply (H),

in general this point of tangency $q \neq t$,

accordingly, basis curve (BC) is defined to be the union of the arc segment A from a to p with the radial equilibrium curve J between points p and q,

the values of $r_c$ and $r_e$ for the radial equilibrium curve can be determined by many means, e. g. to begin by taking $r_c = z_b$ and $r_e = z_e$ and then iterating to find a solution.

11. The method of tire construction as in claim 10, wherein the step of creating a model of the tire (100) comprises determining the reference curve using finite element analysis or computer aided design.

12. The method of tire construction as in claim 10, wherein the step of creating a model of the tire (100) comprises subjecting a physical specimen of the tire to measurement of the body ply (H).

13. The method of tire construction as in claim 10, wherein the tire (100) has a maximum sidewall pressure, and wherein when the body ply (H) is positioned according to the target reference curve, the tire (100) has an inflation growth amplitude A as defined by the value of the distance parameter at point t which is $s_t$, the maximum, minimum and amplitude of an inflation growth (G) over the region from $-s_t$ to $s_t$ at a given azimuthal angle $\theta$ is defined as

$$G_{max}(\theta) = \max_{s \in [-st, st]} G(s, \theta),$$

$$G_{min}(\theta) = \min_{s \in [-st, st]} G(s, \theta),$$

$$A(\theta) = G_{max}(\theta) - G_{min}(\theta),$$

inflation growth $G(s0)$ of the body ply at a point s0 is defined as $G(s0) \equiv D_{CR(s0)CN}$ where $C^R(s0)$ is the body ply curve at the reference pressure and $C^N$ is the body ply curve at the nominal pressure,

$G_{max}(\theta)$ is the maximum inflation growth G found between parameter points $-s_t$ and $s_t$ at a given angle $\theta$,

$G_{min}(\theta)$ is the minimum inflation growth found between parameter points $-s_t$ and $s_t$ at a given angle $\theta$, $A(\theta)$ is the amplitude of the inflation growth at angle $\theta$ and is the difference between $G_{max}(\theta)$ and $G_{min}(\theta)$,

final amplitude measurement is defined herein as an average of $n \geq 4$ evenly spaced azimuthal measurements,

$$A \equiv 1/n \ \Sigma^{n-1}_{i=0} A(\theta = 360°i/n),$$

that is less, or equal to, about 1.5 mm when the tire (100) is inflated from a pressure of about 0.5 bar to about the maximum sidewall pressure.

14. The method of tire construction as in claim 10, wherein said creating step comprises creating a target reference curve for the shape of the body ply (H) along the meridian plane by repositioning the reference curve to have, along both sides of the tire centerline (C/L),

i) a deviation $D(s)$ from the basis curve (BC) in the range of $-4.25 \text{ mm} \leq D(s) \leq 0.5 \text{ mm}$ at a point $P_1 = 0.13s_q + 0.87s_M - 56.6$ mm, and

ii) a deviation $D(s)$ from the basis curve (BC) in the range of $-0.5 \text{ mm} \leq D(s) \leq 1.25 \text{ mm}$ at a point $P_2 = 0.8s_q + 0.2s_M - 13$ mm;

where $s_q$ is the length along the curve of the basis curve (BC) at which point q occurs.

15. The method of tire construction as in claim 10, wherein the tire (100) has a crown radius of greater than, or equal to, about 2000 mm

**Patentansprüche**

1. Reifen (100), der eine radiale Richtung (z), eine axiale Richtung (y), eine Reifenmittellinie (C/L) definiert, wobei der Reifen (100) umfasst:

ein Paar gegenüberliegender Wulstabschnitte (102, 104);
ein Paar gegenüberliegender Seitenwandabschnitten (106, 108), die mit den gegenüberliegenden Wulstabschnitten (102, 104) verbunden sind;
einen Kronenabschnitt (110), der die gegenüberliegenden Seitenwandabschnitte (106, 108) verbindet;
mindestens eine Karkassenlage (H), die sich zwischen den Wulstabschnitten (102, 104) und durch die Seitenwand (106, 108) und die Kronenabschnitte (110) erstreckt, wobei die Karkassenlage (H) eine Kurve entlang einer Meridianebene aufweist, die die y-z-Ebene beinhaltet, wobei s die Länge in mm entlang der Kurve von der Mittellinie (C/L) des Reifens (100) ist; und
eine oder mehrere Riemenlagen (112, 114, 116), die im Kronenabschnitt (110) positioniert sind, wobei $S_M$ die Hälfte der maximalen kurvenförmigen Breite des breitesten Riemens der einen oder mehreren Riemenlagen (112, 114, 116) entlang der axialen Richtung (y) ist, mit einem Winkel $\alpha$ im Bereich von -80 Grad $\leq \alpha \leq$ +80 Grad in Bezug auf eine Äquatorebene des Reifens (100), die die x-z-Ebene umfasst;
**dadurch gekennzeichnet, dass**
wenn eine Basiskurve (BC) entlang der Meridianebene, die drei Tangentialpunkte p, d, q hat, für die Karkassenlage (H) konstruiert ist, entlang mindestens einer Seite der Reifenmittellinie (C/L) die Karkassenlage (H)

i) eine Abweichung D(s) von der Basiskurve im Bereich von -4,25 mm $\leq$ D(s) $\leq$ 0,5 mm an einem Punkt

$$\mathtt{P1 = 0,13_{sq} + 0,87_{SM} - 56,6 \ mm,}$$

und

ii) eine Abweichung D(s) von der Basiskurve im Bereich von -0,5 mm $\leq$ D(s) $\leq$ 1,25 mm an einem Punkt $P2 = 0,8s_q + 0,2_{SM} - 13$ mm hat;
wobei $s_q$ die Länge entlang der Kurve der Basiskurve (BC) ist, an der q auftritt, wobei die Basiskurve (BC) wie folgt aufgebaut ist:

die Form der Karkassenlage H wird bestimmt, indem die Form der Karkassenlage (H) angenommen wird, wenn der Reifen auf einer Applikationsradfelge bei einem Referenzfülldruck von 0,5 bar montiert wird,
der Schnittpunkt der Karkassenlage (H) und der y = 0 Linie definiert den Punkt a an der Reifenmittellinie C/L,
die Karkassenlage (H) in der y-z-Ebene durch die Kurve $C^R(s)$ wird parametrisiert, wobei s der Wert der Kurvenlänge ist gemessen ab Punkt a, der durch den Schnittpunkt der Mittellinie mit der Karkassenlage (H) definiert ist, $s \in [0, L]$, wobei L die Hälfte der gesamten Länge der Karkassenlage (H) ist, gemessen entlang der Kurve $C^R(s)$ in der Meridianebene,
unter Berücksichtigung aller Riemenlagen (112, 114, 116) im Kronenabschnitt (110) des Reifens (100), die Schnüre in einem Winkel $\alpha$ im Bereich von etwa -80 Grad s $\leq \alpha \leq$ +80 Grad in Bezug auf die Äquatorebene (EP) aufweisen, ist Punkt M als ein Punkt definiert, der sich am Ende des breitesten aller derartigen Schnüre befindet, betrachtet in der Meridianebene, wobei der Parameter $S_M$ die maximale kurvenförmige Halbbreite entlang der axialen Richtung (y) eines solchen Riemen in der Meridianebene darstellt,
$S_b$ ist als $S_b = S_M$ - 65 mm definiert, und der Punkt b ist als b = $C^R(s_b)$ definiert,
die Basiskurve (BC) ist aus zwei Teilen aufgebaut, der erste Teil der Basiskurve (BC) beinhaltet einen Kreisbogen A eines Kronenradius $r_s$, der bei Punkt a beginnt und durch Punkt b verläuft,
der Kronenradius $r_s$ wird bestimmt, indem der Bogen an einer horizontalen Linie im Punkt a tangiert wird,

für den zweiten Teil J der Basiskurve (BC):

$S_e$ ist der Parameterwert, bei dem die Karkassenlage (H) ihren Minimalwert in y annimmt, und $S_z$ ist der Parameterwert, bei dem die Karkassenlage (H) ihren Minimalwert in z annimmt,
der Äquatorpunkt e ist als e = $C^R(s_e)$ = $(y_e, z_e)$ definiert und der Punkt z ist als z = $C^R(s_z)$ = $(y_z, Z_z)$ definiert,
L ist als eine vertikale Linie definiert, die durch den Punkt e verläuft,

Punkt h, der h = $(y_h, Z_h)$ ist, ist der Schnittpunkt zwischen einer horizontalen Linie T, die durch den Punkt z und die Linie L verläuft, Punkt h liegt nicht generell auf der Karkassenlage (H),

Abstand n ist als n = $\|e-h\|$ euklidischer Abstand zwischen den Punkten e und h definiert,

ein Zwischenpunkt f, der nicht unbedingt auf der Karkassenlage (H) liegt, ist in Bezug auf den Punkt h als f = $(y_h, z_h + 0,3*n)$ definiert,

eine horizontale Linie wird durch den Punkt f konstruiert und ihr Schnittpunkt mit der Karkassenlage (H) ist als Punkt t definiert, der im Parameter $s_t$ auftritt, so dass t = $C^R(s_t)$,

ein Kreis C ist mit einem Radius von 20 mm konstruiert, der ebenfalls tangential zur Karkassenlage am Punkt t ist,

der Mittelpunkt des Kreises ist als der Punkt g definiert, der 20 mm von der Karkassenlage entfernt liegt (H) entlang der Linie, die durch die Normale zur Karkassenlage $\tilde{n}^Rc(s_t)$ an Punkt t definiert ist,

der zweite Teil der Basiskurve (BC) entsprechend ein radiales Gleichgewichtskurve J beinhaltet, **gekennzeichnet durch** $r_c$, den Mittenradius und den Äquatorradius $r_e$, aufweist,

r ist die übliche zylindrische Polarkoordinate und ist gleich z, wenn sie sich in der y-z Ebene befindet,

die radiale Gleichgewichtskurve kann durch eine Differentialgleichung beschrieben werden und kann auch als ausgehend vom Mittenradius eindeutig konstruiert werden durch Berechnung des Tangentialwinkels $\varphi$ und der Krümmung $\kappa$ der Kurve an jedem nachfolgenden Radius,

die Ausdrücke für den Tangentialwinkel und die Krümmung für eine radiale Gleichgewichtskurve sind $\sin \varphi = (r^2 - r^2_e) / (r^2_c - r^2_e)$ und $\kappa = 2r/(r^2_c - r^2_e)$,

muss die radiale Gleichgewichtskurve J tangential zum Bogen A verlaufen,

der Punkt des tangentialen Schnittpunktes dieser beiden Kurven tritt generell an einem Punkt $p \neq b$ auf,

der Punkt b wird in einer Weise senkrecht zur Referenzkurve für die Karkassenlage (H) auf die Basiskurve (BC) projiziert, um ihr Äquivalent zu erhalten,

typischerweise schneidet der Punkt p den Bogen seitlich nach außen von Punkt b, in diesem Fall ist diese Projektion unnötig, da sie einfach den ursprünglichen Punkt b ergibt,

die radiale Gleichgewichtskurve J und die Linie L müssen tangential zueinander sein, was an einem als Punkt d bezeichneten Punkt geschieht,

im Allgemeinen der Tangentialpunkt $d \neq e$,

die radiale Gleichgewichtskurve J muss tangential zum Kreis C sein, der an Punkt q auftritt, der bei der Kurvenlänge Sq entlang der Karkassenlage (H) auftritt,

im Allgemeinen dieser Tangentialpunkt $q \neq t$,

entsprechend ist die Basiskurve (BC) definiert als die Vereinigung des Bogensegments A von a bis p mit der radialen Gleichgewichtskurve J zwischen den Punkten p und q,

die Werte $r_c$ und $r_e$ für die radiale Gleichgewichtskurve können ermittelt werden, indem man $r_c = z_b$ und $r_e = Z_e$ nimmt und dann iteriert, um eine Lösung zu finden.

2. Reifen (100) nach Anspruch 1, wobei der Reifen (100) einen maximalen Seitenwanddruck aufweist, und wobei der Reifen eine Aufblasungswachstumsamplitude A aufweist, die durch den Wert des Abstandsparameters an Punkt t definiert ist, der

$S_t$ ist, das Maximum, Minimum und die Amplitude eines Inflationswachstums (G) über den Bereich von $-S_t$ bis $S_t$ bei einem gegebenen azimutalen Winkel ist $\theta$ definiert als

$$G_{max}(\theta) = \max_{s \in [-St, St]} G(s, \theta),$$

$$G_{min}(\theta) = \min_{s \in [-St, St]} G(s, \theta),$$

$$A(\theta) = G_{max}(\theta) - G_{min}(\theta),$$

Inflationswachstum G (s0) der Karkassenlage am Punkt s0 ist definiert als $G(s0) \equiv D_C{}^R{}_{(s0)C}{}^N$, wobei $C^R(s0)$ die Karkassenlagenkurve bei dem Referenzdruck ist und $C^N$ die Karkassenlagenkurve bei dem Nenndruck ist,

$G_{max}(\theta)$ ist das maximale Inflationswachstum G, das zwischen den Parameterpunkten $-S_t$ und $S_t$ bei einem gegebenen Winkel $\theta$ gefunden wird,

$G_{min}(\theta)$ ist das minimale Inflationswachstum, das zwischen den Parameterpunkten $-S_t$ und $S_t$ bei einem gegebenen Winkel $\theta$ gefunden wird, $A(\theta)$ ist die Amplitude des Inflationswachstums bei Winkel $\theta$ und ist die Differenz zwischen $G_{max}(\theta)$ und $G_{min}(\theta)$,

die Endamplitudenmessung ist hierin definiert als ein Durchschnitt von $n \geq 4$ gleichmäßig beabstandeten azimutalen Messungen,

$$A = 1/n \ \Sigma^{n-1}{}_{i=0} A(\theta = 360°i/n),$$

die kleiner oder gleich etwa 1,5 mm ist, wenn der Reifen (100) durch einen Druck von etwa 0,5 bar bis etwa zum maximalen Seitenwanddruck aufgeblasen wird.

3. Reifen (100) nach Anspruch 1, wobei, wenn die Basiskurve (BC) entlang der Meridianebene, die drei Tangentialpunkten p, d und q hat, für die Karkassenlage (H) konstruiert ist, entlang beider Seiten der Reifenmittellinie (C/L) die Karkassenlage (H) Folgendes aufweist

    i) eine Abweichung D(s) von der Basiskurve (BC) im Bereich von - 4,25 mm $\leq$ D(s) $\leq$ 0,5 mm an einem Punkt

$$P1 = 0,13 S_q + 0,87 S_M - 56,6 \ \text{mm},$$

    und

    ii) eine Abweichung D(s) von der Basiskurve (BC) im Bereich von - 0,5 mm $\leq$ D(s) $\leq$ 1,25 mm an einem Punkt

$$P_2 = 0,8 S_q + 0,2 S_M - 13 \ \text{mm};$$

    wobei $S_q$ die Länge entlang der Kurve der Basiskurve (BC) ist, an der q auftritt.

4. Reifen (100) nach Anspruch 1, wobei die mindestens eine Karkassenlage (H) eine Vielzahl von Verstärkungen umfasst, die einen Winkel von 80 Grad oder mehr von einer Äquatorebene des Reifens (100) entlang des Kronenabschnitts (110) bildet.

5. Reifen (100) nach Anspruch 1, wobei mindestens eine Riemenlage (122, W) Verstärkungen umfasst, die einen Winkel von 5 Grad oder weniger zu einer Äquatorebene des Reifens (100) entlang des Kronenabschnitts (110) bilden.

6. Reifen (100) nach Anspruch 1, wobei mindestens eine Riemenlage (122, W) Verstärkungen umfasst, die einen Winkel von etwa 0 Grad von einer Äquatorebene des Reifens (100) entlang des Kronenabschnitts (110) bilden.

7. Reifen (100) nach Anspruch 1, wobei der Reifen ein Seitenverhältnis im Bereich von 50 bis 80 aufweist.

8. Reifen (100) nach Anspruch 7, wobei der Reifen (100) eine Querschnittsbreite im Bereich von 275 mm bis 455 mm aufweist.

9. Reifen (100) nach Anspruch 1, wobei, wenn die Karkassenlage (H) durch eine Kurve C(s) in der Meridianebene dargestellt wird und L die halbe Länge der Karkassenlage ist, L im Bereich von etwa 60 mm bis etwa 222 mm liegt.

10. Verfahren zur Reifenkonstruktion, wobei der Reifen (100) eine Mittellinie (C/L) und ein Paar gegenüberliegende Wulstabschnitte (102, 104), ein Paar gegenüberliegende Seitenwandabschnitte (106, 108), die mit den gegenüberliegenden Wulstabschnitten (102, 104) verbunden sind, einen Kronenabschnitt (100), der mit den gegenüberliegenden Seitenwandabschnitten (106, 108) verbunden ist und sich entlang einer axialen Richtung (y) zwischen diesen erstreckt,
mindestens eine Karkassenlage (H) umfasst, die sich zwischen den Wulstabschnitten (102, 104) erstreckt, und durch den Kronenabschnitt (100) und die Seitenwände (106, 108) mindestens eine Riemenlage (122, W), die sich im Kronenabschnitt (110) befindet,
wobei die mindestens eine Gürtellage (122, W) die breiteste Riemenlage entlang der axialen Richtung (y) des Reifens (100) mit einem Winkel $\alpha$ im Bereich von -80 Grad $\leq \alpha \leq$ + 80 Grad in Bezug auf eine Äquatorebene des Reifens (100) ist, die die x-z Ebene aufweist, wobei das Verfahren zur Reifenkonstruktion die folgenden Schritte umfasst:

Erzeugen eines Reifenmodells (100), das eine Referenzkurve darstellt, die Form der Karkassenlage (H) entlang einer Meridianebene, die die y-z-Ebene aufweist, wenn der Reifen (100) auf einen Referenzdruck aufgeblasen wird,

wobei s eine Länge in mm entlang der Referenzkurve von einer Mittellinie (C/L) des Reifens (100) ist;

Konstruieren einer Basiskurve (BC) entlang der Meridianebene für den Reifen (100) basierend auf der Referenzkurve des Reifens (100) bei Referenzdruck, wobei die Basiskurve (BC) drei Tangentialpunkte p, d und q aufweist;

Erzeugen einer Soll-Referenzkurve für die Form der Karkassenlage (H) entlang der Meridianebene durch Repositionierung der Referenzkurve, so dass diese entlang mindestens einer Seite der Mittellinie (C/L) des Reifens,

i) eine Abweichung D(s) von der Basiskurve (BC) im Bereich von -4,25 mm $\leq$ D(s) $\leq$ 0,5 mm an einem Punkt

$$P_1 = 0,13_{sq} + 0,87_{SM} - 56,6 \text{ mm},$$

und

ii) eine Abweichung D(s) von der Basiskurve (BC) im Bereich von -0,5 mm $\leq$ D(s) $\leq$ 1,25 mm an einem Punkt

$$P_2 = 0,8 \ _{sq} + 0,2 \ _{SM} - 13 \text{ mm hat;}$$

wobei $s_q$ die Länge entlang der Kurve der Basiskurve (BC) ist an welchem Punkt q auftritt, wobei die Basiskurve (BC) wie folgt aufgebaut ist:

die Form der Karkassenlage H wird bestimmt, indem die Form der Karkassenlage (H) angenommen wird, wenn der Reifen auf einer Applikationsradfelge mit einem Referenzfülldruck von 0,5 bar montiert wird,

der Schnittpunkt der Karkassenlage (H) und die y = 0-Linie, die den Punkt a an der Reifenmittellinie C/L definiert,

die Karkassenlage (H) in der y-z-Ebene wird durch die Kurve $C^R(s)$ parametrisiert, wobei s die Kurvenlänge ist, gemessen ab Punkt a, der durch den Schnittpunkt der Mittellinie mit der Karkassenlage (H) definiert ist, s $\in$ [0, L], wobei L die Hälfte der Gesamtlänge der Karkassenlage (H) ist gemessen entlang der Kurve $C^R(s)$ in der Meridianebene,

unter Berücksichtigung aller Riemenlagen (112, 114, 116) im Kronenabschnitt (110) des Reifens (100), die Schnüre in einem Winkel $\alpha$ im Bereich von etwa -80 Grad $\leq \alpha \leq$ + 80 Grad in Bezug auf die Äquatorebene (EP) aufweisen, wobei der Punkt M als ein Punkt definiert ist, der sich am Ende des breitesten aller der in der Meridianebene betrachteten Riemen befindet, wobei der Parameter $S_M$ die maximale kurvenförmige Halbwertsbreite entlang der axialen Richtung eines solchen Riemens in der Meridianebene darstellt,

$S_b$ ist definiert als $S_b = S_M$ -65 mm, und der Punkt b ist definiert als b = $C^R(S_b)$, die Basiskurve (BC) ist aus zwei Teilen aufgebaut, dem ersten Teil der Basiskurve (BC), der einen Kreisbogen A mit Kronenradius $r_s$ beginnend bei Punkt a und durchlaufend bei Punkt b beinhaltet,

der Kronenradius $r_s$ wird bestimmt, indem der Bogen im Punkt a zu einer horizontalen Linie tangiert wird, für den zweiten Teil J der Basiskurve (BC):

$S_e$ ist der Parameterwert, für den die Karkassenlage (H) ihren Minimalwert in y annimmt, und $s_z$ ist der Parameterwert, bei dem die Karkassenlage (H) ihren Minimalwert in z annimmt,

der Äquatorpunkt e ist definiert als e = $C^R(S_e)$ = $(y_e, z_e)$ und der Punkt z ist definiert als z = $C^R(S_z)$ = $(y_z, z_z)$,

L ist definiert als eine vertikale Linie, die durch den Punkt e verläuft,

Punkt h, wobei h = $(Y_h, Z_h)$ der Schnittpunkt zwischen einer horizontalen Linie T ist, die durch den Punkt z und die Linie L verläuft, Punkt h liegt im Allgemeinen nicht auf der Karkassenlage (H),

Abstand n ist definiert als n = ‖e-h‖ der euklidische Abstand zwischen den Punkten e und h,

ein Zwischenpunkt f, nicht zwingend auf der Karkassenlage (H), ist in Bezug auf den Punkt h als f = $(y_h, Z_h + 0,3*n)$ definiert,

eine horizontale Linie wird durch den Punkt f und seinen Schnittpunkt mit der Karkassenlage (H) als Punkt t definiert, der im Parameter $s_t$ auftritt, so dass t = $C^R(S_t)$,

ein Kreis C ist mit einem Radius von 20 mm konstruiert, der auch tangential zur Karkassenlage bei Punkt t ist,

der Mittelpunkt des Kreises wird so definiert, dass er der Punkt g ist, der sich 20 mm von der Karkassenlage (H) entfernt befindet entlang der durch die Normale zur Karkassenlage definierten Linie $\tilde{n}^R c(s_t)$ an Punkt t,

der zweite Teil der Basiskurve (BC) weist entsprechend eine radiale Gleichgewichtskurve J auf, **gekennzeichnet durch** $r_c$, den Mittenradius und $r_e$, den Äquatorradius,

r ist die übliche zylindrische Polarkoordinate und ist gleich z, wenn sie in der y-z-Ebene ist,

die radiale Gleichgewichtskurve kann durch eine Differentialgleichung beschrieben werden und kann auch als ausgehend vom Mittenradius durch Berechnung des Tangentialwinkels $\varphi$ und der Krümmung $\kappa$ an jedem nachfolgenden Radius eindeutig konstruiert werden,

die Ausdrücke für den Tangentialwinkel und die Krümmung für eine radiale Gleichgewichtskurve sind $\sin \varphi = (r^2 - r^2_e) / (r^2_c - r^2_e)$ und $\kappa = 2r/(r^2_c - r^2_e)$,

die radiale Gleichgewichtskurve J muss tangential zum Bogen A verlaufen,

der Punkt des tangentialen Schnittpunktes dieser beiden Kurven tritt im Allgemeinen an einem Punkt $p \neq b$ auf,

der Punkt b wird senkrecht zur Referenzkurve für die Karkassenlage (H) auf die Basiskurve (BC) projiziert, um ihr Äquivalent zu erhalten,

typischerweise schneidet der Punkt p den Bogen seitlich nach außen von Punkt b, in diesem Fall ist diese Projektion unnötig, da sie einfach den ursprünglichen Punkt b ergibt,

die radiale Gleichgewichtskurve J und die Linie L müssen tangential zueinander sein, was an einem als Punkt d bezeichneten Punkt geschieht,

im Allgemeinen dieser Tangentialpunkt $d \neq e$,

die radiale Gleichgewichtskurve J muss tangential zum Kreis C sein, der an Punkt q auftritt, der bei der Kurvenlänge $s_q$ entlang der Karkassenlage (H) auftritt,

im Allgemeinen dieser Tangentialpunkt $q \neq t$,

entsprechend ist die Basiskurve (BC) definiert als die Vereinigung des Bogensegments A von a zu p mit der radialen Gleichgewichtskurve J zwischen den Punkten p und q,

die Werte von $r_c$ und $r_e$ für die radiale Gleichgewichtskurve können auf viele Arten bestimmt werden, z. B. zunächst unter $r_c = Z_b$ und $r_e = Z_e$ und dann iterierend, um eine Lösung zu finden.

11. Verfahren zur Reifenkonstruktion nach Anspruch 10, wobei der Schritt zum Erstellen eines Reifenmodells (100) das Bestimmen der Referenzkurve unter Verwendung der Finite-Elemente-Methode oder des computergestützten Designs umfasst.

12. Verfahren zur Reifenkonstruktion nach Anspruch 10, wobei der Schritt des Erstellens eines Reifenmodells (100) umfasst, dass eine physische Probe des Reifens einer Messung der Karkassenlage (H) unterworfen wird.

13. Verfahren zur Reifenkonstruktion nach Anspruch 10, wobei der Reifen (100) einen maximalen Seitenwanddruck aufweist, und wobei, wenn die Karkassenlage (H) gemäß der Soll-Referenzkurve positioniert ist, der Reifen (100) eine Aufblasungswachstumsamplitude A aufweist

definiert durch den Wert des Abstandsparameters an dem Punkt t, der $S_t$ ist, das Maximum, Minimum und die Amplitude eines Inflationswachstums (G) über den Bereich von $-S_t$ bis $S_t$ bei einem gegebenen azimutalen Winkel $\theta$ ist definiert als

$$G_{max}(\theta) = \max_{s \in [-st, st]} G(s, \theta),$$

$$G_{min}(\theta) = \min_{s \in [-st, st]} G(s, \theta),$$

$$A(\theta) = G_{max}(\theta) - G_{min}(\theta),$$

Inflationswachstum G(s0) der Karkassenlage an einem Punkt, s0 definiert als $G(s0) \equiv D_C{}^R{}_{(s0)}C^N$, wobei $C^R(s0)$ die Karkassenlagenkurve bei dem Referenzdruck ist und $C^N$ die Karkassenlagenkurve bei dem Nenndruck ist,

$G_{max}(\theta)$ ist das maximale Inflationswachstum G zwischen den Parameterpunkten $-s_t$ und $s_t$ bei einem gegebenen Winkel $\theta$,

$G_{min}(\theta)$ ist das minimale Inflationswachstum, das zwischen den Parameterpunkten $-s_t$ und bei einem gegebenem Winkel $\theta$, $A(\theta)$ ist die Amplitude des Inflationswachstums bei Winkel $\theta$ und ist die Differenz zwischen $G_{max}(\theta)$

und $G_{min}(\theta)$,
die Endamplitudenmessung ist hierin definiert als der Durchschnitt von $n \geq 4$ gleichmäßig beabstandete azimutale Messungen,

$$A \ = \ 1/n \ \Sigma^{n-1}_{i=0} A(\theta \ =360°i/n),$$

die kleiner oder gleich etwa 1,5 mm ist, wenn der Reifen (100) durch einen Druck von etwa 0,5 bar bis etwa zum maximalen Seitenwanddruck aufgeblasen wird.

14. Verfahren zur Reifenkonstruktion nach Anspruch 10, wobei die Erzeugungsschritte eine Soll-Referenzkurve für die Form der Karkassenlage (H) entlang der Meridianebene erzeugen, indem die Referenzkurve entlang beider Seiten der Reifenmittellinie (C/L) neu positioniert wird,

i) eine Abweichung D(s) von der Basiskurve (BC) im Bereich von -4,25 mm $\leq$ D(s) $\leq$ 0,5 mm an einem Punkt

$$P_1 = \ 0,13s_q \ + \ 0,87s_M \ - \ 56,6 \ mm,$$

und
ii) eine Abweichung D(s) von der Basiskurve (BC) im Bereich von -0,5 mm $\leq$ D(s) $\leq$ 1,25 mm an einem Punkt

$$P_2 \ = \ 0,8 \ S_q \ + \ 0,2 \ s_M \ - \ 13 \ mm;$$

wobei $s_q$ die Länge entlang der Kurve der Basiskurve (BC) ist, an der q auftritt.

15. Verfahren zur Reifenkonstruktion nach Anspruch 10, wobei der Reifen (100) einen Kronenradius von größer oder gleich etwa 2000 mm aufweist

## Revendications

1. Pneumatique (100) définissant une direction radiale (z), une direction axiale (y), et une ligne centrale (C/L), le pneumatique (100) comprenant :

une paire de parties de talon (102, 104) opposées ;
une paire de parties de flanc (106, 108) opposées reliées aux parties de talon (102, 104) opposées ;
une partie de couronne (110) reliant les parties de flanc (106, 108) opposées ;
au moins une nappe carcasse (H) s'étendant entre les parties de talons (102, 104) et à travers les parties de flanc (106, 108) et de couronne (110), la nappe carcasse (H) ayant une courbure le long d'un plan méridien qui inclut le plan y-z, dans lequel s est longueur en mm le long de la courbe depuis la ligne centrale (C/L) du pneumatique (100) ; et
une ou plusieurs nappes de ceinture (112, 114, 116) positionnées dans la partie de couronne (110), dans lequel $s_M$ est un demi de la largeur curviligne maximum, le long de la direction axiale (y), de la ceinture la plus large des une ou plusieurs nappes de ceinture (112, 114, 116) ayant un angle $\alpha$ dans la plage de -80 degrés$\leq \alpha \leq$+80 degrés par rapport à un plan équatorial du pneumatique (100) qui inclut le plan x-z ;
**caractérisé en ce que**
quand une courbe de base (BC) le long du plan méridien ayant trois points de tangence p, d, et q est construite pour la nappe carcasse (H), le long d'au moins un côté de la ligne centrale (C/L) la nappe carcasse (H) a

i) une déviation D(s) depuis la courbe de base dans la plage de -4,25 mm $\leq$ D(s) $\leq$ 0,5 mm en un point $P_1$=0,13sq + 0,87$s_M$ - 56,6 mm, et
ii) une déviation D(s) depuis la courbe de base dans la plage de -0,5 mm $\leq$ D(s) $\leq$ 1,25 mm en un point $P_2$=0,8$s_q$ + 0,2$s_M$ - 13 mm ;
où $s_q$ est la longueur le long de la courbe de la courbe de base (BC) en laquelle le point q se trouve, où la courbe de base (BC) est construite comme suit :

la forme de la nappe carcasse H est déterminée en utilisant la forme que la nappe carcasse (H) prend quand le pneumatique est monté sur une jante de roue d'application à une pression de gonflage de référence de 0,5 bar,

avec l'intersection de la nappe carcasse (H) et de la ligne y = 0 définissant le point a au niveau de la ligne centrale de pneumatique C/L,

la nappe carcasse (H) est paramétrée dans le plan y-z par la courbe $C^R(s)$, où s est la longueur de courbe mesurée depuis un point a qui est défini par l'intersection de la ligne centrale avec la nappe carcasse (H), $s \in [0, L]$, où L est un demi de la longueur totale de la nappe carcasse (H) telle que mesurée le long de la courbe $C^R(s)$ dans le plan méridien,

considérant toutes les nappes de ceinture (112, 114, 116) dans la partie de couronne (110) du pneumatique (100) qui ont des câbles à un angle $\alpha$ dans la plage d'environ -80 degrés$\leq \alpha \leq$+80 degrés par rapport au plan équatorial (EP), le point M est défini comme étant un point situé à l'extrémité de la plus large de toutes telles ceintures telles que vues dans le plan méridien, avec le paramètre $s_M$ représentant la demi-largeur curviligne maximum le long de la direction axiale (y) d'une telle ceinture dans le plan méridien,

$s_b$ est définie comme $s_b = s_M$ - 65 mm, et le point b est défini comme $b = C^R(s_b)$,

la courbe de base (BC) est construite à partir de deux parties,

la première partie de la courbe de base (BC) inclut un arc de cercle A de rayon de couronne $r_s$ commençant au point a et passant par le point b,

le rayon de couronne $r_s$ est déterminé en demandant que l'arc soit tangent à une ligne horizontale au point a,

pour la seconde partie J de la courbe de base (BC) :

$s_e$ est la valeur de paramètre pour laquelle la nappe carcasse (H) prend sa valeur minimum en y, et $s_z$ est la valeur de paramètre pour laquelle la nappe carcasse (H) prend sa valeur minimum en z,

le point d'équateur e est défini comme $e = C^R(s_e) = (y_e, z_e)$ et le point z est défini comme $z = C^R(s_z) = (y_z, z_z)$,

L est définie comme une ligne verticale passant par le point e,

le point h, qui est $h = (y_h, z_h)$, est l'intersection entre une ligne horizontale T passant par le point z et la ligne L, le point h ne se trouve pas en général sur la nappe carcasse (H),

la distance n est définie comme $n = \|e-h\|$ la distance euclidienne entre les points e et h,

un point intermédiaire f, pas nécessairement sur la nappe carcasse (H), est défini par rapport au point h comme $f = (y_h, z_h + 0,3*n)$,

une ligne horizontale est construite passant par le point f et son point d'intersection avec la nappe carcasse (H) est défini comme le point t, qui se trouve au paramètre $s_t$ de telle manière que $t = C^R(s_t)$,

un cercle C est construit avec un rayon de 20 mm qui est aussi tangent à la nappe carcasse au point t,

le centre du cercle est défini comme étant le point g situé à 20 mm de la nappe carcasse (H) le long de la ligne définie par la normale à la nappe carcasse $\tilde{n}^R c(s_t)$ au point t,

par conséquent, la seconde partie de la courbe de base (BC) inclut une courbe d'équilibre radial J **caractérisée par** $r_c$, le rayon central, et $r_e$, le rayon équatorial,

r est la coordonnée radiale polaire cylindrique usuelle et est égale à z quand elle est dans le plan y-z,

la courbe d'équilibre radial peut être décrite par une équation différentielle et peut aussi être construite de manière non ambigüe en commençant depuis le rayon central en calculant l'angle tangent $\varphi$ et la courbure $\kappa$ de la courbe à chaque rayon suivant,

les expressions pour l'angle tangent et la courbure pour une courbe d'équilibre radial sont

$$\sin \varphi = (r^2 - r^2_e)/(r^2_c - r^2_e) \text{ et } \kappa = 2r/(r^2_c - r^2_e),$$

la courbe d'équilibre radial J doit être tangente à l'arc A,

le point d'intersection tangentielle de ces deux courbes se trouve en un point $p \neq b$ en général,

le point b est projeté d'une façon perpendiculaire à la ligne de référence pour la nappe carcasse (H) sur la courbe de base (BC) pour obtenir son équivalent,

habituellement le point p coupe l'arc latéralement à l'extérieur du point b, dans lequel cas cette projection est inutile car cela correspond simplement au point original b,

la courbe d'équilibre radial J et la ligne L doivent être tangentes l'une à l'autre, ce qui a lieu en un point désigné comme le point d,

en général le point de tangence $d \neq e$,

la courbe d'équilibre radial J doit être tangente au cercle C, ce qui a lieu au point q ce qui a lieu à une longueur de courbe $s_q$ le long de la nappe carcasse (H),

en général ce point de tangence q≠t,

par conséquent, la courbe de base (BC) est définie comme étant l'union du segment d'arc A de a à p avec la courbe d'équilibre radial J entre les points p et q,

les valeurs de $r_c$ et $r_e$ pour la courbe d'équilibre radial peuvent être déterminées en prenant $r_c = z_b$ et $r_e = z_e$ et en itérant ensuite pour trouver une solution.

2. Pneumatique (100) selon la revendication 1, dans lequel le pneumatique (100) a une pression de flanc maximum, et dans lequel le pneumatique a une amplitude de croissance de gonflage A, telle que définie par la valeur du paramètre de distance au moins t qui est $s_t$, le maximum, le minimum et l'amplitude d'une croissance de gonflage (G) sur la région de -st à st à un angle azimutal donné θ est défini comme

$$G_{max}(\theta) = \max_{S \in [-St, St]} G(s, \theta),$$

$$G_{min}(\theta) = \min_{S \in [-St, St]} G(s, \theta),$$

$$A(\theta) = G_{max}(\theta) - G_{min}(\theta),$$

la croissance de gonflage G(s0) de la nappe carcasse en un point s0 est définie comme $G(s0) \equiv D_C{}^R{}_{(s0)C}{}^N$ où $C^R(s0)$ est la courbe de nappe carcasse à la pression de référence et $C^N$ est la courbe de nappe carcasse à la pression nominale,

$G_{max}(\theta)$ est la croissance de gonflage maximum G trouvée entre des points de paramètre $-s_t$ et $s_t$ à un angle θ donné,

$G_{min}(\theta)$ est la croissance de gonflage minimum G trouvée entre des points de paramètre $-s_t$ et $s_t$ à un angle θ donné, $A(\theta)$ est l'amplitude de la croissance de gonflage à l'angle θ et est la différence entre $G_{max}(\theta)$ et $G_{min}(\theta)$, la mesure d'amplitude finale est définie ici comme une moyenne de n≥4 mesures azimutales également espacées,

$$A \equiv 1/n \sum_{i=0}^{n-1} A(\theta = 360°i/n),$$

qui est inférieure ou égale à environ 1,5 mm quand le pneumatique (100) est gonflé depuis une pression d'environ 0,5 bar jusqu'à environ la pression de flanc maximum.

3. Pneumatique (100) selon la revendication 1, dans lequel quand la courbe de base (BC) le long du plan méridien ayant trois point de tangence p, d, et q est construite pour la nappe carcasse (H), le long des deux côtés de la ligne centrale (C/L) la nappe carcasse (H) a

i) une déviation D(s) depuis la courbe de base (BC) dans la plage de -4,25 mm ≤ D(s) ≤ 0,5 mm en un point $P_1 = 0,13s_q + 0,87s_M - 56,6$ mm, et

ii) une déviation D(s) depuis la courbe de base (BC) dans la plage de -0,5 mm ≤ D(s) ≤ 1,25 mm en un point $P_2 = 0,8s_q + 0,2s_M - 13$ mm ;

où $s_q$ est la longueur le long de la courbe de la courbe de base (BC) en laquelle le point q se trouve.

4. Pneumatique (100) selon la revendication 1, dans lequel l'au moins une nappe carcasse (H) comprend une pluralité de renforcements formant un angle de 80 degrés ou plus depuis un plan équatorial du pneumatique (100) le long de la partie de couronne (110).

5. Pneumatique (100) selon la revendication 1, dans lequel au moins une nappe de ceinture (122, W) comprend des renforcements formant un angle de 5 degrés ou moins depuis un plan équatorial du pneumatique (100) le long de la partie de couronne (110).

6. Pneumatique (100) selon la revendication 1, dans lequel au moins une nappe de ceinture (122, W) comprend des renforcements formant un angle d'environ 0 degrés depuis un plan équatorial du pneumatique (100) le long de la partie de couronne (110).

**7.** Pneumatique (100) selon la revendication 1, dans lequel le pneumatique a un rapport d'aspect dans la plage de 50 à 80.

**8.** Pneumatique (100) selon la revendication 7, dans lequel le pneumatique (100) a une largeur de section dans la plage de 275 mm à 455 mm.

**9.** Pneumatique (100) selon la revendication 1, dans lequel quand la nappe carcasse (H) est représentée par une courbe C(s) dans le plan méridien et L est la demi-longueur de la nappe carcasse, L est dans la plage d'environ 60 mm à environ 222 mm.

**10.** Procédé de construction de pneumatique, le pneumatique (100) incluant une ligne centrale (C/L) et une paire de parties de talons (102, 104) opposées, une paire de parties de flanc (106, 108) opposées reliées aux parties de talons (102, 104) opposées, une partie de couronne (100) reliée à, et s'étendant le long d'une direction axiale (y) entre, les parties de flanc (106, 108) opposées, au moins une nappe carcasse (H) s'étendant entre les parties de talons (102, 104) et à travers la partie de couronne (100) et les parties de flanc (106, 108), au moins une nappe de ceinture (122, W) située dans la partie de couronne (110), l'au moins une nappe de ceinture (122, W) étant la nappe de ceinture la plus large le long de la direction axiale (y) du pneumatique (100) ayant un angle $\alpha$ dans la plage de -80 degrés$\leq \alpha \leq$+80 degrés par rapport à un plan équatorial du pneumatique (100) qui inclut le plan x-z, le procédé de construction de pneumatique comprenant les étapes de :

création d'un modèle du pneumatique (100) qui inclut une courbe de référence représentant la forme de la nappe carcasse (H) le long d'un plan méridien qui inclut le plan y-z quand le pneumatique (100) est gonflé à une pression de référence, dans lequel s est une longueur en mm le long de la courbe de référence depuis une ligne centrale (C/L) du pneumatique (100) ;
construction d'une courbe de base (BC) le long du plan méridien pour le pneumatique (100) en se basant sur la courbe de référence du pneumatique (100) à la pression de référence, la courbe de base (BC) ayant trois points de tangence p, d, et q ;
création d'une courbe de référence cible pour la forme de la nappe carcasse (H) le long du plan méridien en repositionnant la courbe de référence pour avoir, le long d'au moins un côté de la ligne centrale (C/L),

i) une déviation D(s) depuis la courbe de base (BC) dans la plage de -4,25 mm $\leq$ D(s) $\leq$ 0,5 mm en un point

$$P_1 = 0,13 s_q + 0,87 s_M - 56,6 \text{ mm},$$

et

ii) une déviation D(s) depuis la courbe de base (BC) dans la plage de -0,5 mm $\leq$ D(s) $\leq$ 1,25 mm en un point

$$P_2 = 0,8 s_q + 0,2 s_M - 13 \text{ mm} ;$$

où $s_q$ est la longueur le long de la courbe de la courbe de base (BC) en laquelle le point q se trouve, où la courbe de base (BC) est construite comme suit :

la forme de la nappe carcasse H est déterminée en utilisant la forme que la nappe carcasse (H) prend quand le pneumatique est monté sur une jante de roue d'application à une pression de gonflage de référence de 0,5 bar,
l'intersection de la nappe carcasse (H) et de la ligne y=0 définissant le point a au niveau de la ligne centrale de pneumatique C/L,
la nappe carcasse (H) est paramétrée dans le plan y-z par la courbe $C^R(s)$, où s est la longueur de courbe mesurée depuis un point a qui est défini par l'intersection de la ligne centrale avec la nappe carcasse (H), s $\in$ [0,L], où L est un demi de la longueur totale de la nappe carcasse (H) telle que mesurée le long de la courbe $C^R(s)$ dans le plan méridien,
considérant toutes les nappes de ceinture (112, 114, 116) dans la partie de couronne (110) du pneumatique (100) qui ont des câbles à un angle $\alpha$ dans la plage de -80 degrés$\leq \alpha \leq$+80 degrés par rapport au plan équatorial (EP), le point M est défini comme étant un point situé à l'extrémité de la plus large de toutes telles ceintures telles que vues dans le plan méridien, avec le paramètre $s_M$ représentant la demi-largeur curviligne maximum le long de la direction axiale (y) d'une telle ceinture dans le plan méridien,

$s_b$ est définie comme $s_b = s_M - 65$ mm, et le point b est défini comme $b = C^R(s_b)$,

la courbe de base (BC) est construite à partir de deux parties,

la première partie de la courbe de base (BC) inclut un arc de cercle A de rayon de couronne $r_s$ commençant au point a et passant par le point b,

le rayon de couronne $r_s$ est déterminé en demandant que l'arc soit tangent à une ligne horizontale au point a,

pour la seconde partie J de la courbe de base (BC) :

$s_e$ est la valeur de paramètre pour laquelle la nappe carcasse (H) prend sa valeur minimum en y, et $s_z$ est la valeur de paramètre pour laquelle la nappe carcasse (H) prend sa valeur minimum en z,

le point d'équateur e est défini comme $e = C^R(s_e) = (y_e, z_e)$ et le point z est défini comme $z = C^R(s_z) = (y_z, z_z)$,

L est définie comme une ligne verticale passant par le point e,

le point h, qui est $h = (y_h, z_h)$, est l'intersection entre une ligne horizontale T passant par le point z et la ligne L, le point h ne se trouve pas en général sur la nappe carcasse (H),

la distance n est définie comme $n = \|e-h\|$ la distance euclidienne entre les points e et h,

un point intermédiaire f, pas nécessairement sur la nappe carcasse (H), est défini par rapport au point h comme $f = (y_h, z_h+0,3*n)$,

une ligne horizontale est construite passant par le point f et son point d'intersection avec la nappe carcasse (H) est défini comme le point t, qui se trouve au paramètre $s_t$ de telle manière que $t = C^R(s_t)$,

un cercle C est construit avec un rayon de 20 mm qui est aussi tangent à la nappe carcasse au point t,

le centre du cercle est défini comme étant le point g situé à 20 mm de la nappe carcasse (H) le long de la ligne définie par la normale à la nappe carcasse $\tilde{n}^R c(s_t)$ au point t,

par conséquent, la seconde partie de la courbe de base (BC) inclut une courbe d'équilibre radial J **caractérisée par** $r_c$, le rayon central, et $r_e$, le rayon équatorial,

r est la coordonnée radiale polaire cylindrique usuelle et est égale à z quand elle est dans le plan y-z,

la courbe d'équilibre radial peut être décrite par une équation différentielle et peut aussi être construite de manière non ambiguë en commençant depuis le rayon central en calculant l'angle tangent $\varphi$ et la courbure $\kappa$ de la courbe à chaque rayon suivant,

les expressions pour l'angle tangent et la courbure pour une courbe d'équilibre radial sont $\sin \varphi = (r^2-r^2_e)/(r^2_c -r^2_e)$ et $\kappa = 2r/(r^2_c-r^2_e)$,

la courbe d'équilibre radial J doit être tangente à l'arc A,

le point d'intersection tangentielle de ces deux courbes se trouve en un point $p \neq b$ en général,

le point b est projeté d'une façon perpendiculaire à la ligne de référence pour la nappe carcasse (H) sur la courbe de base (BC) pour obtenir son équivalent,

habituellement le point p coupe l'arc latéralement à l'extérieur du point b, dans lequel cas cette projection est inutile car cela correspond simplement au point original b,

la courbe d'équilibre radial J et la ligne L doivent être tangentes l'une à l'autre, ce qui a lieu en un point désigné comme le point d,

en général le point de tangence $d \neq e$,

la courbe d'équilibre radial J doit être tangente au cercle C, ce qui a lieu au point q ce qui a lieu à une longueur de courbe $s_q$ le long de la nappe carcasse (H),

en général ce point de tangence $q \neq t$,

par conséquent, la courbe de base (BC) est définie comme étant l'union du segment d'arc A de a à p avec la courbe d'équilibre radial J entre les points p et q,

les valeurs de $r_c$ et $r_e$ pour la courbe d'équilibre radial peuvent être déterminées par de nombreux moyens, par exemple en commençant par prendre $r_c = z_b$ et $r_e = z_e$ et en itérant ensuite pour trouver une solution.

**11.** Procédé de construction de pneumatique selon la revendication 10, dans lequel l'étape de création d'un modèle du pneumatique (100) comprend de déterminer la courbe de référence en utilisant une analyse par éléments finis ou une conception assistée par ordinateur.

**12.** Procédé de construction de pneumatique selon la revendication 10, dans lequel l'étape de création d'un modèle du pneumatique (100) comprend de soumettre un spécimen physique du pneumatique à une mesure de la nappe carcasse (H).

**13.** Procédé de construction de pneumatique selon la revendication 10, dans lequel le pneumatique (100) a une pression de flanc maximum, et dans lequel quand la nappe carcasse (H) est positionnée selon la courbe de référence cible, le pneumatique (100) a une amplitude de croissance de gonflage A, telle que définie par la valeur du paramètre de distance au moins t qui est $s_t$, le maximum, le minimum et l'amplitude d'une croissance de gonflage (G) sur la région de $-s_t$ à $s_t$ à un angle azimutal donné $\theta$ est défini comme

$$G_{max}(\theta) = \max_{S \in [-St, St]} G(s, \theta),$$

$$G_{min}(\theta) = \min_{S \in [-St, St]} G(s, \theta),$$

$$A(\theta) = G_{max}(\theta) - G_{min}(\theta),$$

la croissance de gonflage G(s0) de la nappe carcasse en un point s0 est définie comme $G(s0) \equiv D_C{}^R{}_{(s0)} C^N$ où $C^R(s0)$ est la courbe de nappe carcasse à la pression de référence et $C^N$ est la courbe de nappe carcasse à la pression nominale,
$G_{max}(\theta)$ est la croissance de gonflage maximum G trouvée entre des points de paramètre $-s_t$ et $s_t$ à un angle $\theta$ donné,
$G_{min}(\theta)$ est la croissance de gonflage minimum G trouvée entre des points de paramètre $-s_t$ et $s_t$ à un angle $\theta$ donné, $A(\theta)$ est l'amplitude de la croissance de gonflage à l'angle $\theta$ et est la différence entre $G_{max}(\theta)$ et $G_{min}(\theta)$,
la mesure d'amplitude finale est définie ici comme une moyenne de $n \geq 4$ mesures azimutales également espacées,

$$A \equiv 1/n \sum_{i=0}^{n-1} A(\theta = 360°i/n),$$

qui est inférieure ou égale à environ 1,5 mm quand le pneumatique (100) est gonflé depuis une pression d'environ 0,5 bar jusqu'à environ la pression de flanc maximum.

**14.** Procédé de construction de pneumatique selon la revendication 10, dans lequel ladite étape de création comprend de créer une courbe de référence cible pour la forme de la nappe carcasse (H) le long du plan méridien en repositionnant la courbe de référence pour avoir, le long des deux côtés de la ligne centrale (C/L),

i) une déviation D(s) depuis la courbe de base (BC) dans la plage de $-4,25 \text{ mm} \leq D(s) \leq 0,5 \text{ mm}$ en un point

$$P_1 = 0,13 s_q + 0,87 s_M - 56,6 \text{ mm},$$

et
ii) une déviation D(s) depuis la courbe de base (BC) dans la plage de $-0,5 \text{ mm} \leq D(s)$ e$\leq 1,25 \text{ mm}$ en un point

$$P_2 = 0,8 s_q + 0,2 s_M - 13 \text{ mm} ;$$

où $s_q$ est la longueur le long de la courbe de la courbe de base (BC) en laquelle le point q se trouve.

**15.** Procédé de construction de pneumatique selon la revendication 10, dans lequel le pneumatique (100) a un rayon de couronne supérieur ou égal à environ 2000 mm.

*FIG. -1-*

FIG. -2-

$\vec{n}_R \ (S_0)$

$q_i$

$\vec{R}_{(S_0)}$

$\vec{t}_R \ (S_0)$

X

R

$\vec{X}(0)$

$\vec{R}(0)$

Z

y

A

FIG. $-3-$

$C(s)^R$

$C(s)^N$

H

H

FIG. -4-

CARCASSE INFLATION GROWTH

445/50R22.5 PRODUCTION TIRE
----- 445/50R22.5 CURRENT INVENTION

*FIG. -5-*

FIG. −6−

C/L

100

EP

−α +α

FIG. −7−

FIG. -8-

DEVIATION FROM BASIS CURVE

445/50R22.5 PRODUCTION TIRE (N)
------ 445/50R22.5 CURRENT INVENTION (H)

*FIG. -9-*

DEVIATION FROM BASIS CURVE
PRODUCTION TIRE

—— 455/55R22.5 PRODUCTION TIRE
------ 445/50R22.5 PRODUCTION TIRE
—— 385/65R22.5 PRODUCTION TIRE
— — 275/80R22.5 PRODUCTION TIRE

*FIG. -10-*

DEVIATION FROM BASIS CURVE
CURRENT INVENTION

CURVE LENGTH $s'$ (mm)

——— 455/55R22.5 CURRENT INVENTION
------ 445/50R22.5 CURRENT INVENTION
——— 385/65R22.5 CURRENT INVENTION
— - — 275/80R22.5 CURRENT INVENTION

*FIG. -11-*

DEVIATION FROM BASIS CURVE
CURRENT INVENTION

NORMALIZED SHIFTED CURVE LENGTH $s''$

——— 455/55R22.5 CURRENT INVENTION
------ 445/50R22.5 CURRENT INVENTION
——— 385/65R22.5 CURRENT INVENTION
— - — 275/80R22.5 CURRENT INVENTION

*FIG. -12-*

## DEVIATION FROM BASIS CURVE
## PRODUCTION TIRE

——— 455/55R22.5 PRODUCTION TIRE
------- 445/50R22.5 PRODUCTION TIRE
——— 385/65R22.5 PRODUCTION TIRE
— — 275/80R22.5 PRODUCTION TIRE

*FIG. -13-*

## CARCASSE INFLATION GROWTH
## PRODUCTION TIRE

——— 455/55R22.5 PRODUCTION TIRE
------- 445/50R22.5 PRODUCTION TIRE
——— 385/65R22.5 PRODUCTION TIRE
— — 275/80R22.5 PRODUCTION TIRE

*FIG. -14-*

**CARCASSE INFLATION GROWTH**
**CURRENT INVENTION**

—— 455/55R22.5 CURRENT INVENTION
------ 445/50R22.5 CURRENT INVENTION
—— 385/65R22.5 CURRENT INVENTION
— — — 275/80R22.5 CURRENT INVENTION

*FIG. —15—*

**DEVIATION FROM BASIS CURVE**
**PRODUCTION TIRE**

—— 455/55R22.5 PRODUCTION TIRE
------ 445/50R22.5 PRODUCTION TIRE
—— 385/65R22.5 PRODUCTION TIRE
— — — 275/80R22.5 PRODUCTION TIRE
——— P1 LIMITS
——— P2 LIMITS

*FIG. —16—*

## DEVIATION FROM BASIS CURVE
## CURRENT INVENTION

——— 455/55R22.5 CURRENT INVENTION
------ 445/50R22.5 CURRENT INVENTION
——— 385/65R22.5 CURRENT INVENTION
– – – 275/80R22.5 CURRENT INVENTION
——— P1 LIMITS
——— P2 LIMITS

*FIG. –17–*

## INFLATION GROWTH PARAMETERS

——— 445/50R22.5 PRODUCTION TIRE

*FIG. –18–*

INFLATION GROWTH vs. P1

FIG. -19-

INFLATION GROWTH vs. P2

FIG. -20-

FIG. -21-

**EP 3 212 442 B1**

## REFERENCES CITED IN THE DESCRIPTION

**Patent documents cited in the description**

- EP 0103984 A
- WO 2011070111 A
- FR 2796005